# EUROPEAN PATENT APPLICATION

(11) **EP 2 120 434 A2**
(43) Date of publication of application: **18.11.2009**
(21) Application number: 09006628.3
(22) Date of filing: 15.05.2009
(51) Int. Cl.: H04M 1/725

(54) **Mobile terminal**

(30) Priority: 16.05.2008 JP 2008130004
(71) Applicant: Kabushiki Kaisha Toshiba, Minato-ku, Tokyo 105-8001 (JP)
(72) Inventor: Ichinose, Takashi, Tokyo 105-8001 (JP); Haneda, Takushiro, Tokyo 105-8001 (JP); Zhang, Yue, Tokyo 105-8001 (JP); Muranaka, Toshiaki, Tokyo 105-8001 (JP); Tsubouchi, Masatoshi, Tokyo 105-8001 (JP)
(74) Representative: HOFFMANN EITLE

(57) **Abstract**

A cellular phone, which can be applied to a mobile terminal of the present invention in emergency, has a main display and a control device. The cellular phone receives an emergency mail from the mobile terminal, and the main display displays the received emergency mail. The control device notifies that the emergency mail is received using a vibrator, a speaker, an light emitting device, and the like and executes a control such that it is notified that the emergency mail is received each preset and predetermined period of time during a period of time until a confirming operation to the emergency mail is executed. With this operation, convenience of the cellular phone is improved in emergency.

## Description

### BACKGROUND OF THE INVENTION

### 1. Field of the Invention

The present invention relates to a mobile terminal, and more particularly to a mobile terminal such as a cellular phone capable of transmitting and receiving an emergency mail in emergency.

### 2. Description of the Related Art

Recently, cellular phones as mobile terminals are mounted with not only a communication function by a simple phone communication but also with an address book function, a mail function through a base station and a network such as the Internet, a browser function capable of browsing a Web page, and further a music control function capable of hearing audio data, a function capable of receiving a terrestrial digital one-segment broadcast wave.

Recently, the cellular phones become widespread in a wide age-group, and each person has at least one cellular phone. Accordingly, it is considered that users of cellular phones communicate with each other using the cellular phones in emergency such as a natural disaster and that autonomies such as local public agencies transmit a notification of occurrence of a disaster to the respective users of the cellular phones.

There is known a cellular phone which can secure a remaining amount of a battery so that a user can make an emergency communication even when an emergency circumstance such as a disaster occurs (refer to, for example, Japanese Unexamined Patent Application Publication No. 2007-243793). According to the technology disclosed in Japanese Unexamined Patent Application Publication No. 2007-243793, if a digital TV receiving circuit receives an emergency alarm signal, a control circuit instructs a power supply control circuit to interrupt to supply a voltage to a circuit corresponding to a function for prohibiting a use, and, at the time, a function for prohibiting the use stepwise is increased.

Incidentally, if respective autonomies transmit a notification of occurrence of a disaster to cellular phones of respective users in emergency such as earthquake, a problem arises in that even if the occurrence of the disaster is notified using a mail, it is difficult to sufficiently notify the users of the occurrence of the disaster and movements thereafter if the users, to which the notification is transmitted, are aged or children.

Specifically, it is supposed that even if the respective autonomies transmit a notification of the occurrence of the disaster to the cellular phones of the users in a bedridden state due to a poor health condition of a body, when the cellular phones do not exist in a location which the users can access, the users cannot confirm a mail as to the notification of the occurrence of the disasters received by the cellular phones.

### SUMMARY OF THE INVENTION

The present invention has been made in view of the circumstances described above. An object of the present invention is to provide a mobile terminal such as a cellular phone capable of improving convenience thereof in emergency.

To solve the problem of the present invention, a mobile terminal of the present invention has a receiving unit configured to receive a first mail and a second mail different from the first mail; a determining unit configured to determine whether or not determining information included in a mail received by the receiving unit coincides with previously stored determining information; and a control unit configured to control so as to determine that the received mail is the first mail and execute an operation if the first mail is received, in a case where the determining unit determines that the determining information included in the mail received by the receiving unit coincides with the previously stored determining information. To solve the problem of the present invention, a mobile terminal of the present invention has a receiving unit configured to receive an emergency mail from an external terminal; a display unit configured to display the emergency mail if the emergency mail is received by the receiving unit; a notifying unit configured to notify that the emergency mail is received; and a control unit configured to control the notifying unit so as to notify that the emergency mail is received, each predetermined period of time until a confirming operation is executed to the emergency mail. To solve the problem of the present invention, a mobile terminal of the present invention has a receiving unit configured to receive an emergency mail from an external terminal; a display unit configured to display the emergency mail received by the receiving unit; a notifying unit configured to notify that the emergency mail is received; an obtaining unit configured to obtain position information related to the mobile terminal each predetermined period of time until a confirming operation is executed to the emergency mail; and a transmitting unit configured to transmit the position information obtained by the obtaining unit to the external terminal. To solve the problem of the present invention, a mobile terminal of the present invention has a receiving unit configured to receive an emergency mail from an external terminal; a display unit configured to display the emergency mail received by the receiving unit; a notifying unit configured to notify that the emergency mail is received; and a display control unit configured to control the display unit so as to display a display screen for displaying the emergency mail in a first display region and an arrival screen when the voice incoming call arrives, in a second display region, if a voice incoming call arrives while the emergency mail is being displayed by the display unit. To solve the problem of the present invention, a mobile terminal of the present invention has a receiving unit configured to receive an emergency mail from an external terminal; a determining unit configured to determine whether or not key information included in the emergency mail received by the receiving unit coincides with previously stored key information; and a control unit configured to control so as to execute an operation when the emergency mail is received, if the determining unit determines that the key information included in the emergency mail received by the receiving unit coincides with previously stored key information, and so as to abandon the received emergency mail or treat the received emergency mail as an ordinary mail if the determining unit determines that the key information included in the emergency mail received by the receiving unit does not coincide with previously stored key information.

According to the present invention, convenience of the mobile terminal in emergency can be improved.

### BRIEF DESCRIPTION OF THE DRAWINGS

Fig. 1 is a view showing a schematic arrangement of a network system according to the present invention;
Figs. 2A and 2B are views showing an external arrangement of a cellular phone which can be applied to a mobile terminal according to the present invention;
Figs. 3A and 3B are views showing other external arrangement of the cellular phone which can be applied to the mobile terminal according to the present invention;
Fig. 4 is a block diagram showing an internal arrangement of the cellular phone which can be applied to the mobile terminal according to the present invention;
Figs. 5A to 5D are conceptual views of transmission and reception of an emergency mail according to the present invention;
Fig. 6 is a flowchart explaining an emergency mail receiving process in the cellular phone of Fig. 4;
Fig. 7 is a flowchart explaining other emergency mail receiving process in the cellular phone of Fig. 4;
Fig. 8 is a flowchart explaining a mail receiving process in the cellular phone of Fig. 4;
Fig. 9 is a flowchart explaining a transmission mail transmitting process in the cellular phone of Fig. 4;
Fig. 10 is a flowchart explaining other emergency mail receiving process in the cellular phone of Fig. 4;
Fig. 11 is a flowchart explaining other emergency mail receiving process in the cellular phone of Fig. 4;
Fig. 12 is a flowchart explaining other emergency mail receiving process in the cellular phone of Fig. 4;
Fig. 13 is a flowchart explaining other mail receiving process in the cellular phone of Fig. 4;
Fig. 14 is a flowchart explaining other emergency mail receiving process in the cellular phone of Fig. 4;
Fig. 15 is a sequence view in which a character string as to whether or not a voice call or a TV phone call is to be executed is added by return to an emergency mail after the emergency mail is received, and the voice call or the TV phone call is automatically executed to a transmission terminal by return after the emergency mail is received by a cellular phone on a reception side;
Fig. 16 is a sequence view in which, a character string as to whether or not a return mail is to be transmitted is added to an emergency mail after the emergency mail is received, and after the emergency mail is received by the cellular phone on the reception side, the return mail is automatically transmitted to the transmission terminal;
Fig. 17 is a flowchart explaining an emergency mail transmitting process in the transmission terminal of Fig. 1;
Fig. 18 is a flowchart explaining other emergency mail receiving process in the cellular phone of Fig. 4;
Fig. 19 is a flowchart explaining other emergency mail receiving process in the cellular phone of Fig. 4;
Fig. 20 is a flowchart explaining other emergency mail receiving process in the cellular phone of Fig. 4;
Fig. 21 is a flowchart explaining other emergency mail receiving process in the cellular phone of Fig. 4;
Fig. 22 is a flowchart explaining other emergency mail receiving process in the cellular phone of Fig. 4;
Fig. 23 is a flowchart explaining other emergency mail receiving process in the cellular phone of Fig. 4;
Fig. 24 is a flowchart explaining other emergency mail receiving process in the cellular phone of Fig. 4;
Fig. 25 is a flowchart explaining other emergency mail receiving process in the cellular phone of Fig. 4;
Fig. 26 is a flowchart explaining an operation setting process executed when an emergency mail is received by the cellular phone of Fig. 4;
Fig. 27 is a flowchart explaining other emergency mail receiving process in the cellular phone of Fig. 4;
Figs. 28A to 28C are views showing a confirmation response and position information from a cellular phone managed by the transmission terminal of Fig. 1;
Figs. 29A and 29B are views showing display examples of an incoming permission setting screen displayed on a main display of Fig. 4 and an incoming screen displayed thereon while an emergency mail is being displayed;
Fig. 30 is a flowchart explaining other emergency mail receiving process in the cellular phone of Fig. 4;
Fig. 31 is a flowchart explaining other emergency mail receiving process in the cellular phone of Fig. 4;
Fig. 32 is a view showing a display example of an emergency mail transmission setting screen displayed on the main display of Fig. 4;
Fig. 33 is a flowchart explaining an emergency mail transmission setting process in the transmission terminal of Fig. 1;
Fig. 34 is a flowchart explaining an emergency mail reception setting process in the cellular phone of Fig. 4;
Fig. 35 is a flowchart explaining other emergency mail transmitting process in the transmission terminal of Fig. 1;
Fig. 36 is a flowchart explaining other emergency mail receiving process in the cellular phone of Fig. 4; and
Fig. 37 is a view showing a physical change in a cellular phone when an emergency mail is received.

### DETAILED DESCRIPTION OF THE PREFERRED EMBODIMENTS

An embodiment of the present invention will be explained below referring to the drawings.

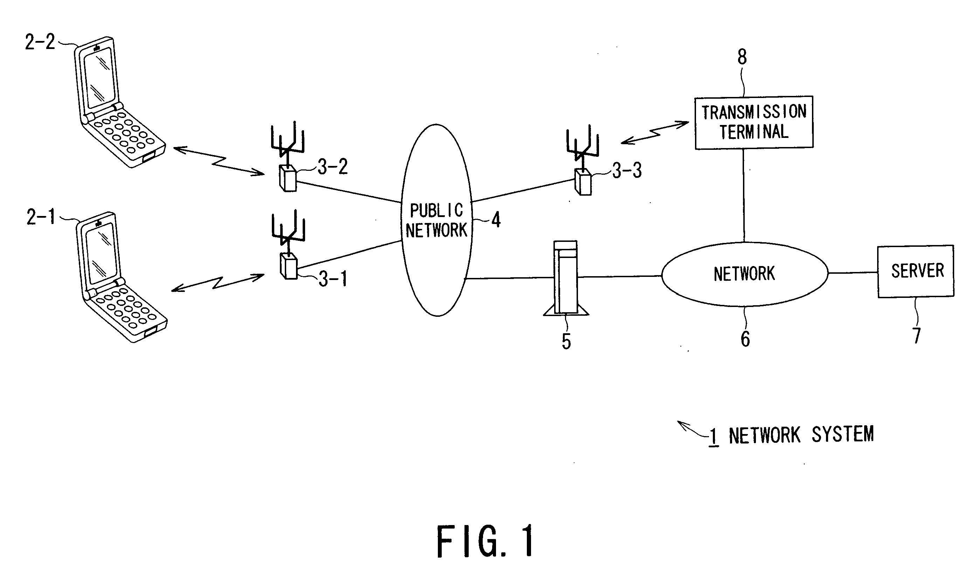

Fig. 1 shows an overall arrangement of a network system 1 according to the present invention. As shown in Fig. 1, in the network system 1, base stations 3-1 to 3-3 as a fixed radio station are provided in each cell of a desired size in a coverage area of a communication service. The base stations 3-1 to 3-3 are connected with cellular phones 2-1 and 2-2 as a mobile radio station by radio based on a W-CDMA. The cellular phone 2-1 and 2-2 can communicate data at high speed. To be more specific, the cellular phone 2-1 and 2-2 can transmit/receive a large amount of data using a 5 [MHz] bandwidth in a 2 [GHz] frequency band at 2[Mbps] if standing still and at 384 [Kbps] if moving.As described above, since the cellular phone 2-1 or 2-2 can transmit the large amount of data at the high speed by the W-CDMA method, the cellular phone 2-1 or 2-2 can execute not only a voice incoming call but also many types of data communications such as transmission and reception of an electronic mail, browse of a simple home page, transmission and reception of an image, and the like. Further, the base stations 3-1 to 3-3 are connected to a public network 4 through a wired channel, and an access server 5 of an Internet service provider is connected to the public network 4. Various servers 7 are connected to the access server 5 through a network 6 (including, for example, the Internet, LAN (Local Area Network), WAN (Wide Area Network), and other various types of networks). Further, the network system 1 has a transmission terminal 8 installed thereto, and the transmission terminal 8 transmits an emergency mail to cellular phones 2 of respective users through the base station 3-3 and the network 6 in emergency such as occurrence of earthquake. The transmission terminal 8 is managed by respective autonomies. The cellular phone 2 may be used in place of the transmission terminal 8.

In the embodiment of the present invention, a case that the two sets of the cellular phones 2-1 and 2-2 exist will be explicitly explained to simplify explanation. However, the present invention is not limited to the case and can be also applied to a case that three or more cellular phones 2 exist. If it is not necessary to individually discriminate the cellular phones 2-1 and 2-2, they are generically called a cellular phone 2 below. Further, if it is not necessary to individually discriminate the base stations 3-1 and 3-3, they are generically called a base station 3 below.

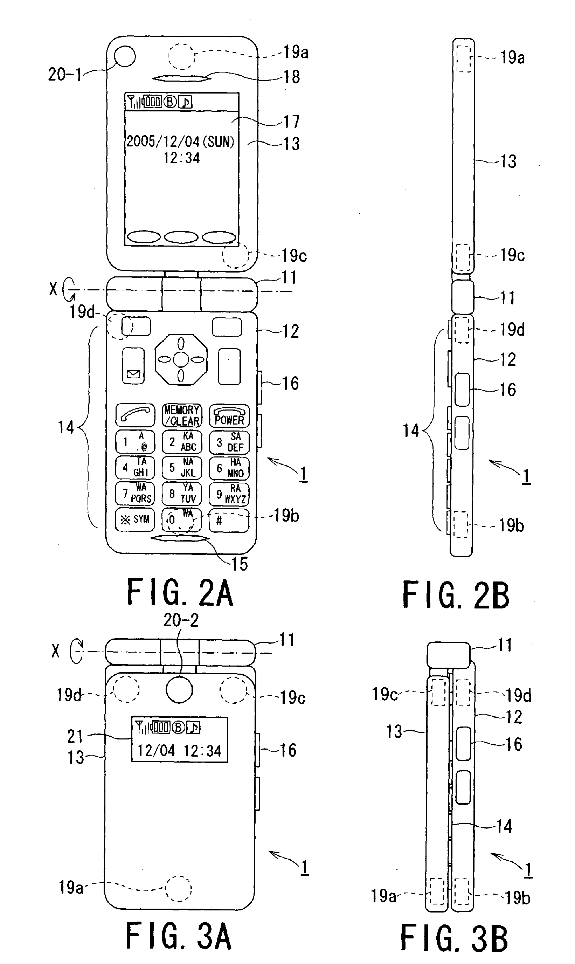

Figs. 2A and 2B show an external arrangement of the cellular phone 2 which can be applied as a mobile terminal according to the present invention. Fig. 2A shows the external arrangement of the cellular phone 2 if it is opened about 180° and viewed from a front surface. Fig. 2B shows the external arrangement of the cellular phone 2 if it is opened and viewed from a side surface.

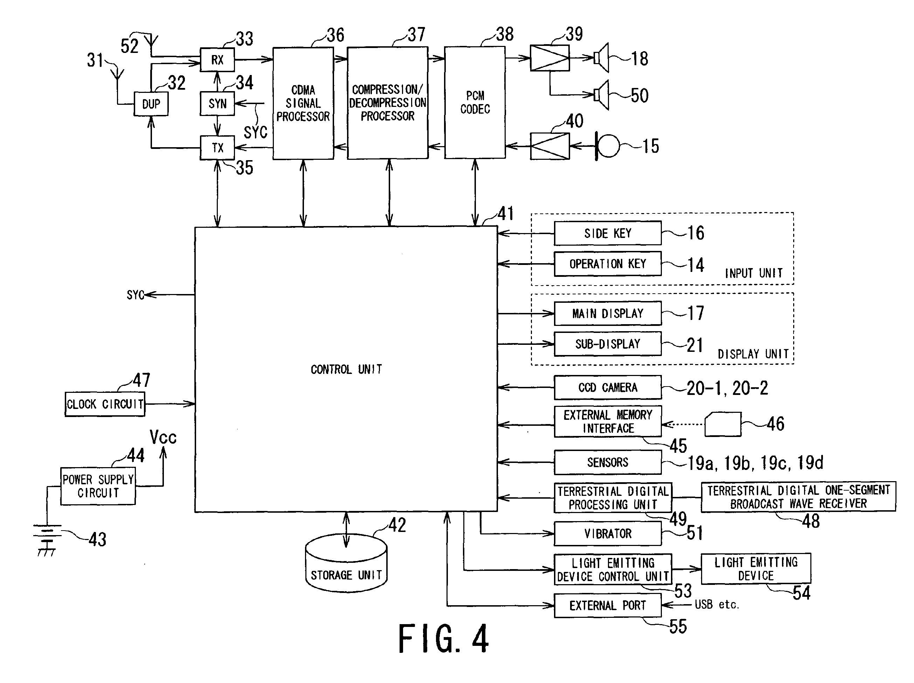

As shown in Figs. 2A and Fig. 2B, the cellular phone 2 includes a first body 12 and a second body 13 that are hinge-connected to each other with a hinge part 11 in the middle. The cellular phone 2 is formed so as to be foldable in an arrow X direction via the hinge part 11. A transmitting and receiving antenna (an antenna 31 of Fig. 4 described below) is provided at a predetermined position inside the cellular phone 2. The cellular phone 2 may transmit and receive radio waves with a base station via the built-in antenna.

On the surface of the first body 12, there are provided operation keys 14, including alphanumeric keys "0" to "9", a outgoing call key, a redial key, a power key, a redial key, a clear key, and an e-mail key. It is possible to input various instructions by using the operation keys 14.

The operation keys 14 include a cross key and a confirmation key located in an upper part of the first body 12. By operating the cross key from side to side and up and down, the user can move a displayed cursor from side to side and up and down. Specifically, various operations, such as scrolling of an address book list, e-mail messages, simplified homepages, and various images displayed on a main display 17 in the second body 13, are performed.

Pressing the confirmation key allows the user to confirm various functions. For example, when a desired phone number is selected from a plurality of phone numbers on the address book list displayed on the main display 17 according to the user's operation of the cross key, and then, the confirmation key is pressed toward the interior of the first body 12, the selected phone number is confirmed and an outgoing call processing is performed for the telephone number.

The first body 12 also has the e-mail key located to the left of the cross key and the confirmation key. When the e-mail key is pressed toward the interior of the first body 12, e-mail transmission and reception functions are called. The browser key is provided to the right of the cross key and the confirmation key. Pressing the browser key toward the interior of the first body 12 allows the user to view data on Web pages.

The first body 12 has a microphone 15 located under the operation keys 14. The microphone 15 collects user's voice during a call. The first body 12 also has a side key 16 for operating the cellular phone 2.

A battery pack is inserted to be attached on a back surface of the first body 12. When the power key is turned on, power supplied from the battery pack actuates each circuit.

The second body 13 has the main display 17 on its front surface. The main display 17 displays a reception state of the radio wave, a remaining battery level, destination names and phone numbers registered in the address book, a transmission history, content of e-mail messages, simplified homepages, images picked up by a charge-coupled device (CCD) camera (a CCD camera 20-1 disposed to the second body 13 or a CCD camera 20-2 of Fig. 3 described below), content received from an external content server, and content stored in a memory card (a memory card 46 of Fig. 4 described below). A telephone receiver (earpiece) 18 is provided at a predetermined position above the main display 17. The telephone receiver 18 allows the user to make a voice call. Besides the telephone receiver 18, a speaker (a speaker 50 of Fig. 4 described below) serving as a voice output unit is provided at a predetermined position in the cellular phone 2.

Magnetic sensors 19a, 19b, 19c, and 19d for detecting a state of the cellular phone 2 are provided at predetermined positions inside the first body 12 and second body 13. The main display 17 may be a display composed of an organic EL or a liquid crystal display. Further, the CCD camera 20-1 is disposed to an upper portion of the second body 13. A desired subject can be picked up by the CCD camera 20-1. For the purpose of convenience, the CCD camera 20-1 disposed to the second body 13 is called an "in-camera", and the CCD camera 20-2 disposed to the second body 13 shown in Figs. 3A and 3B to be described later is called an "out-camera".

Figs. 3A and Fig. 3B show other external arrangement of the cellular phone 2 which can be applied as the mobile terminal according to the present invention. The second body 13 at the position shown in Figs. 2A and Fig. 2B pivots in the direction of arrow X to the position shown in Figs. 3A and Fig. 3B. Figs. 3A and Fig. 3B are a front external view and a side external view, respectively, of the cellular phone 2 in a closed state. The state of the cellular phone 2 shown in Figs. 2A and 2B is called an "open state, and the state of the cellular phone 2 shown in Figs. 3A and 3B is called a "closed state.

The CCD camera 20-2 is provided in an upper part of the second body 13. The CCD camera 20-2 allows the user to pick up an image of a desired target. The sub-display 21 is provided under the CCD camera 20-2. The sub-display 21 displays an antenna pictogram indicating a current sensitivity level of the antenna, a battery pictogram indicating a current remaining battery level of the cellular phone 2, and current time.

Fig. 4 shows an internal arrangement of the cellular phone 2 which can be applied as the mobile terminal according to the present invention. A radio signal transmitted from the base station 3 is received by the antenna 31, passes through an antenna duplexer (DUP) 32, and is input to a receiving circuit (RX) 33. The receiving circuit 33 may perform mixing of the received radio signal with a local oscillation signal output from a frequency synthesizer (SYN) 34 to down-convert the received radio signal into an intermediate frequency signal. Then, the receiving circuit 33 generates a reception baseband signal by performing a quadrature demodulation (quadrature detection) on the down-converted intermediate frequency signal. The receiving circuit 33 outputs the generated baseband signal to a CDMA signal processor 36. The frequency of the local oscillation signal generated from the frequency synthesizer 34 is indicated by a control signal SYC output from a control unit 41.

The CDMA signal processor 36 is provided with a RAKE receiver. In the RAKE receiver, a plurality of paths included in the reception baseband signal are de-spread with respective spread codes (i.e., spread codes equivalent to those of the spread reception signals). Then, after the phase in the despread signals of the respective paths is adjusted, the despread signals of the respective paths are coherently RAKE-combined by the RAKE receiver. A data series obtained through the Rake combining is subjected to de-interleaving, channel decoding (error correction decoding), and binary data determination. Thus, reception packet data in a predetermined transmission format can be obtained. The reception packet data is input to a compression/decompression processor 37.

The compression/decompression processor 37 is composed of a digital signal processor (DSP). The compression/decompression processor 37 separates the reception packet data output from the CDMA signal processor 36 in a multiplexer/demultiplexer for each media, and perform a decoding processing on the separated data for each media. For example, in a call mode, speech data included in the reception packet data and corresponding to spoken voice is decoded by a speech codec. If video data is included in the reception packet data, such as in the case of a videophone mode, the video data is decoded by a video codec. For example, if the reception packet data is downloaded content, the downloaded content is decompressed (expanded) and output to the control unit 41.

A digital speech signal obtained by decoding is supplied to a PCM codec 38. The PCM codec 38 PCM-decodes the digital speech signal output from the compression/decompression processor 37, and outputs an analog speech signal obtained by the PCM decoding to a receiving amplifier 39. The analog speech signal is amplified by the receiving amplifier 39 and output by the telephone receiver 18.

A digital video signal obtained through decoding performed by the compression/decompression processor 37 at the video codec is input to the control unit 41. The control unit 41 causes the main display 17 to display, via a video RAM such as a VRAM, a video image based on the digital video signal output from the compression/decompression processor 37. The control unit 41 causes the main display 17 to display, via the RAM, not only a received video data but also a video data picked up by the CCD camera 20-1 or the CCD camera 20-2.

If the reception packet data is an e-mail message, the compression/decompression processor 37 supplies the e-mail message to the control unit 41. The control unit 41 causes a storage unit 42 to store the e-mail message supplied from the compression/decompression processor 37. Then, in response to the user's operation of the operation keys 14 included in an input unit, the control unit 41 reads the e-mail message stored in the storage unit 42 and causes the main display 17 to display the read e-mail message.

On the other hand, in the call mode, a speaker's (user's) speech signal (analog speech signal) input to the microphone 15 is amplified to a proper level by a transmitting amplifier 40 and PCM-coded by the PCM codec 38. A digital speech signal obtained by the PCM coding is input to the compression/decompression processor 37. A video signal output from the CCD camera 20-1 or the CCD camera 20-2 is digitized by the control unit 41 and input to the compression/decompression processor 37. An e-mail message, which is text data generated by the control unit 41, is also input to the compression/decompression processor 37.

The compression/decompression processor 37 may compression-code the digital speech signal from the PCM codec 38 in a format corresponding to a predetermined transmission data rate. Thus, speech data is generated. Also, the compression/decompression processor 37 compression-codes the digital video signal from the control unit 41 so as to generate video data. Then, the compression/decompression processor 37 causes the multiplexer/demultiplexer to multiplex the speech data and the video data into transmission packet data in accordance with a predetermined transmission format. The compression/decompression processor 37 packetizes the data multiplexed in the multiplexer/demultiplexer. The compression/decompression processor 37 outputs the transmission packet data after the packetization to the CDMA signal processor 36. When an e-mail message is output from the control unit 41, the compression/decompression processor 37 similarly causes the multiplexer/demultiplexer to multiplex the e-mail message into transmission packet data.

The CDMA signal processor 36 uses a spread code assigned to a transmission channel to perform spread spectrum processing on the transmission packet data output from the compression/decompression processor 37, and outputs an output signal generated by the spread spectrum processing to a transmission circuit (TX) 35. The transmission circuit 35 modulates the signal after the spread spectrum processing by using a digital modulation method such as a QPSK (Quadrature Phase Shift Keying) method. The transmission circuit 35 synthesizes the transmission signal after the digital modulation with the local oscillator signal generated from the frequency synthesizer 34 to up-convert the transmission signal into the radio signal. Then, the transmission circuit 35 high-frequency-amplifies the radio signal generated by the up-conversion so as to obtain the transmission power level indicated by the control unit 41. The high-frequency-amplified radio signal is supplied via the antenna duplexer 32 to the antenna 31, and is transmitted from the antenna 31 to the base station 3.

The cellular phone 2 has an external memory interface 45, which has a slot allowing insertion and withdrawal of the memory card 46. The memory card 46 is a type of flash memory card typified by a NAND flash memory card and a NOR flash memory card. Various types of data, such as images, speech, and music can be written to and read from the memory card 46 via a 10-pin terminal. The cellular phone 2 further has a clock circuit (timer) 47 for accurate measurement of the current time.

The control unit 41 includes a central processing unit (CPU), a read only memory (ROM), and a random access memory (RAM). The CPU performs various types of processing according to a program stored in the ROM or various application programs loaded from the storage unit 42 to the RAM, generates various control signals, supplies the control signals to various sections, and thus controls the overall operation of the cellular phone 2. The RAM stores data necessary for the CPU to perform various types of processing.

The storage unit 42 is composed of a hard disk drive (HDD) or a flash memory device, which is a nonvolatile memory allowing electrical writing and erasing. The storage unit 42 stores various data groups and various application programs to be executed by the CPU in the control unit 41.

A power circuit 44 generates a predetermined operating supply voltage Vcc on the basis of an output from a battery 43 and supplies the operating supply voltage Vcc to each circuit unit. A terrestrial digital one-segment broadcast wave receiver 48 receives the terrestrial digital one-segment broadcast wave and the terrestrial digital radio broadcast wave from the broadcasting station. The terrestrial digital one-segment broadcast wave receiver 48 generates a TS (Transport Stream) signal based on the received terrestrial digital one-segment broadcast wave and the terrestrial digital radio broadcast wave to be supplied to a terrestrial digital processing unit 49. In a case where the terrestrial digital one-segment broadcast wave receiver 48 receives the terrestrial digital one-segment broadcast wave, the terrestrial digital processing unit 49 separates the TS signal based on the terrestrial digital one-segment broadcast wave from the terrestrial digital one-segment broadcast wave receiver 48 into an ES (Elementary Stream) related to the audio data and an ES related to video data. The terrestrial digital processing unit 49 decodes the separated audio data with an audio decoder in the terrestrial digital processing unit 49 on the basis of a predetermined decoding method, and also decodes the separated video data with a video decoder in the terrestrial digital processing unit 49 on the basis of a predetermined decoding method. The terrestrial digital processing unit 49 supplies the control unit 41 with the audio signal after the decoding and the video signal after the decoding.

If an incoming mail or an incoming call is received, a vibrator 51 vibrates by a predetermined vibration pattern in order to notify a reception of the incoming mail or the incoming call to the user. A light emitting device 54 is composed of an LED (Light Emitting Diode). If an incoming mail or an incoming call is received, the light emitting device 54 emits light in a predetermined light emitting pattern in accordance with control of a light emitting device control unit 53, in order to notify a reception of the incoming mail or the incoming call to the user.

Further, GPS waves (GPS information) from GPS satellites are received by a GPS antenna 52. The GPS information includes transmission time information from the respective GPS satellites. Thereafter, the GPS information is input to the control unit 41 through the CDMA signal processor 36. Then, the control unit 41 calculates the position information (information of a latitude and a longitude) showing a present position of the cellular phone 2 (which is preferably calculated from three to four pieces of GPS information) using the obtained GPS information and determines the position information showing the present position of the cellular phone 2. Although the latitude and the longitude are ordinarily obtained as the position information determined based on the GPS information, address information corresponding to the latitude and the longitude may be further obtained. Accordingly, "the position information based on GPS position measurement" includes information such as the position information (for example, latitude and longitude information) calculated from the GPS information, the address information corresponding to the information, and the like.

Further, the cellular phone 2 is provided with an external port 55 to which a connection cable to external equipment, for example, a USB, an ear phone, a charger is connected, in addition to the external memory interface 45.

In emergency such as earthquake, respective autonomies transmit an emergency mail to the cellular phones 2 of respective users in order to notify occurrence of a disaster.

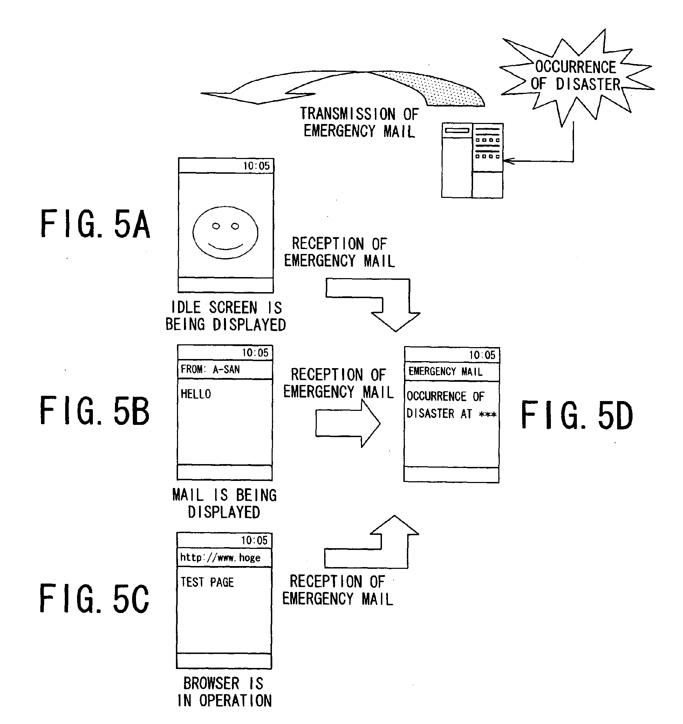

Fig. 5 is a conceptual view of transmission/ reception of an emergency mail according to the present invention. As shown in Fig. 5, in emergency of earthquake, the transmission terminal 8 managed by the respective autonomies transmits an emergency mail to the cellular phone 2 of the user. If the cellular phone 2 of each user receives the emergency mail from the transmission terminal 8 managed by the respective autonomies, the cellular phone 2 displays that the emergency mail is received even if a screen displayed on the main display 17 at that time is a screen other than an idle screen. Specifically, even if a mail is displayed or a browser is activated without displaying the idle screen as shown in Figs. 5A to 5C, an emergency mail such as "emergency mail: disaster occurs at *** !!" is displayed as shown in Fig. 5D.

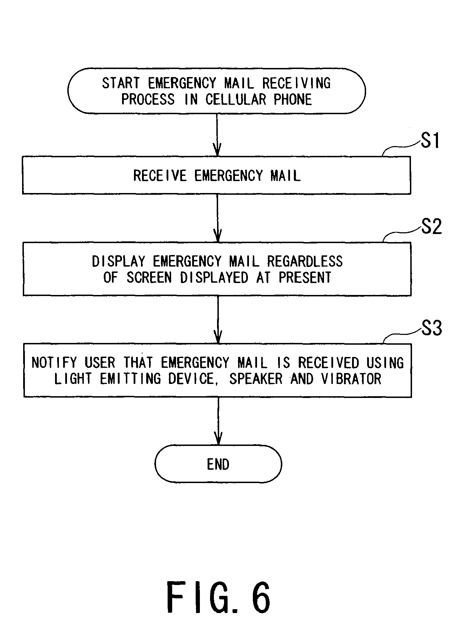

At the time, in order to securely notify the user of the occurrence of the disaster, the notification is executed by combining lighting of a notification lamp by the light emitting device 54, issuing of a special reception sound by the speaker 50, generation of vibration in a special vibration pattern by the vibrator 51 and lighting of the sub-display 21. A flowchart of Fig. 6 shows an emergency mail receiving process executed by the cellular phone 2 on a reception side in this case.

The emergency mail receiving process in the cellular phone 2 on the reception side shown in Fig. 4 will be explained referring to the flowchart of Fig. 6. At step S1, the cellular phone 2 receives an emergency mail from the transmission terminal 8 managed by the respective autonomies through the antenna 31 and the receiving circuit 33, and the received emergency mail is output to the control unit 41. At step S2, the control unit 41 obtains the received emergency mail. The control unit 41 controls the main display 17 and cause the main display 17 to display the emergency mail. As shown in Fig 5D, the main display 17 displays the emergency mail in accordance with a control of the control unit 41 regardless of display screens (display screens shown in Fig. 5A to 5C) being displayed at that time.

At step S3, the control unit 41 controls such that the notification lamp is lit by the light emitting device 54, the special reception sound is issued using the speaker 50, the vibration is generated by the vibrator 51 in the special vibration pattern, the lighting is made by the sub-display 21, and the like in combination. Various patterns are contemplated as the combination of these operations. For example, lighting of the notification lamp, issuing of the reception sound, and vibration of the vibrator may be executed at the same time or sequentially. Further, only the notification lamp may be lit at first, the reception sound may be additionally issued after a predetermined period of time passes and further the vibrator 51 may be vibrated additionally after a predetermined period of time further passes, and the sequence of these operations may be appropriately changed.

With these operations, if the emergency mail is received, it is possible to notify the user of the occurrence of a disaster instantly without depending on a screen being displayed at that time. Further, it is possible to more securely notify the user of the occurrence of a disaster by approaching the senses of hearing, sight, and touch of the user by lighting the notification lamp by the light emitting device 54, issuing the special reception sound using the speaker 50, vibrating the vibrator 51 in the special vibration pattern and lighting the sub-display 21 in combination in addition to displaying the emergency mail. Accordingly, a possibility of occurrence of a state that the user is not aware of the notification of the emergency mail can be reduced.

Types of an emergency mail, which is transmitted from the transmission terminal 8 managed by the respective autonomies to the cellular phone 2 of the user in emergency, will be explained. The types of the emergency mail include a first type using an E-Mail and a second type using an SMS (Short Message Service). In the first type, the following emergency mail matching conditions are included in a text of an emergency mail so that the cellular phone 2 on the reception side can determine that a received mail is the emergency mail. As the emergency mail matching conditions, there are (1) a sender address (a transmission source address of the transmission terminal 8), (2) a subject (for example, "emergency mail"), (3) a character string of the leading end of a text (for example, "occurrence of a disaster"). In contrast, in the second type, the following emergency mail matching conditions are included in a text of an emergency mail. As the emergency matching conditions, there are (1) a center address (that is, an address of an SMS server managed by a mobile carrier), (2) a sender address (a transmission source address of the transmission terminal 8), (3) a character string of the leading end of a text (for example, "occurrence of a disaster"). Since the sender address can be rewritten, in the second type, (1) the sender address, which can not be actually rewritten, is included in the emergency mail matching conditions in order to prevent "masquerade".

The first type is advantageous in that the range to which it is applied can be increased because the cellular phone 2 of an ordinary user can also generate an emergency mail in accordance with the set conditions. In contrast, the second type is advantageous in that "masquerade" as to an emergency mail can be preferably prevented because the contents of the emergency mail are intensively managed on the mobile carrier side. As described above, the emergency mail can be securely discriminated from the mails other than the emergency on the reception side by combining several conditions as the emergency mail matching conditions. It is needless to say that matching conditions other than the above conditions may be also used as the matching conditions.

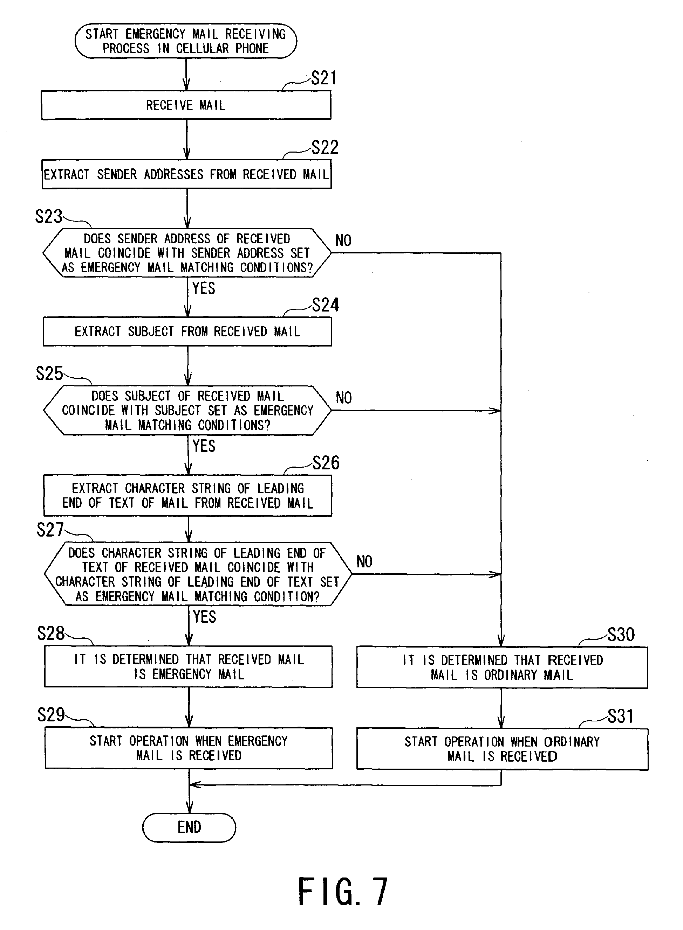

Next, a mail receiving process in the first type will be explained referring to a flowchart of Fig 7. In the mail receiving process, the cellular phone 2 on the reception side receives an emergency mail in which the matching conditions are included and ordinary mails other than the emergency mail while discriminating the emergency mail from the ordinary mails.

At step S1, the cellular phone 2 receives mails (an emergency mail from the transmission terminal 8 managed by the respective autonomies or ordinary mails other than the emergency mail) through the antenna 31 and the receiving circuit 33.The received mails are output to the control unit 41. At step S22, the control unit 41 extracts sender addresses from the received mails. At step S23, the control unit 41 determines whether or not the extracted sender address coincides with the sender address which is previously set as the emergency mail matching conditions. The sender address, which is previously set as the emergency mail matching conditions, is stored in, for example, the storage device 42. The subject of a mail and the character string at the leading end of a text of the mail, which will be explained below, are also previously stored in the storage device 42.

If the control unit 41 determines at step S23 that the extracted sender address does not coincide with the sender address previously set as the emergency mail matching conditions, the process goes to step S30. At step S30, the control unit 41 determines that the received mail is the ordinary mail. At step S31, in order to notify the user that the ordinary mail is received, the control unit 41 controls the vibrator 51, the speaker 50, and the light emitting device 54 to start an operation if the ordinary mail is received. With this operation, an ordinary vibration process, an ordinary lighting process of the emitting device 54, a reception sounding process of the speaker 50 are respectively executed.

In contrast, if the control unit 41 determines at step S23 that one of the extracted sender address coincides with the sender address previously set as the emergency mail matching conditions, the control unit 41 extracts the subject of the mail from the received mail at step S24. At step S25, the control unit 41 determines whether or not the subject of the extracted mail coincides with a subject previously set as the emergency mail matching conditions (for example, a subject such as "the emergency mail"). If the control unit 41 determines at step S24 that the subject of the extracted mail does not coincide with the subject previously set as the emergency mail matching conditions, the process goes to step S30 at which it is determined that the mail are the ordinary mail as well as a process at step S31 is executed.

In contrast, at step S24, if the control unit 41 determines that the subject of the extracted mail coincides with the subject previously set as the emergency mail matching conditions, the control unit 41 extracts the character string at the leading end of a text of the mail from the received mail at step S26. At step S27, the control unit 41 determines whether or not the character string at the leading end of the text of the extracted mail coincides with the character string (for example, "occurrence of a disaster") at the leading end of a text set as the emergency mail matching conditions.

If the control unit 41 determines at step S27 that the character string at the leading end of the text of the extracted mail does coincide with the character string at the leading end of the text set as the emergency mail matching conditions, the process goes to step S30 at which it is determined that the extracted mail is the ordinary mail as well as a process at step S31 is executed. In contrast, if the control unit 41 determines at step S27 that the character string at the leading end of the text of the extracted mail coincides with the character string at the leading end of the text set as the emergency mail matching conditions, the control unit 41 determines at step S28 that the received mail is the emergency mail because the extracted mail coincides with all of the previously set emergency mail matching conditions. Accordingly, in order to notify the user that the emergency mail is received, the control unit 41 controls the main display 17 and causes the main display 17 to display the emergency mail as well as starts an operation if an emergency mail is received by controlling the vibrator 51, the speaker 50, and the light emitting device 54 at step S29. Processes executed in the operation if the emergency mail is received are the same as those at steps S2 to S3 of Fig. 6. Further, since the operation if the emergency mail is received is made different from the operation if an ordinary mail is received, the user can easily recognize the emergency mail.

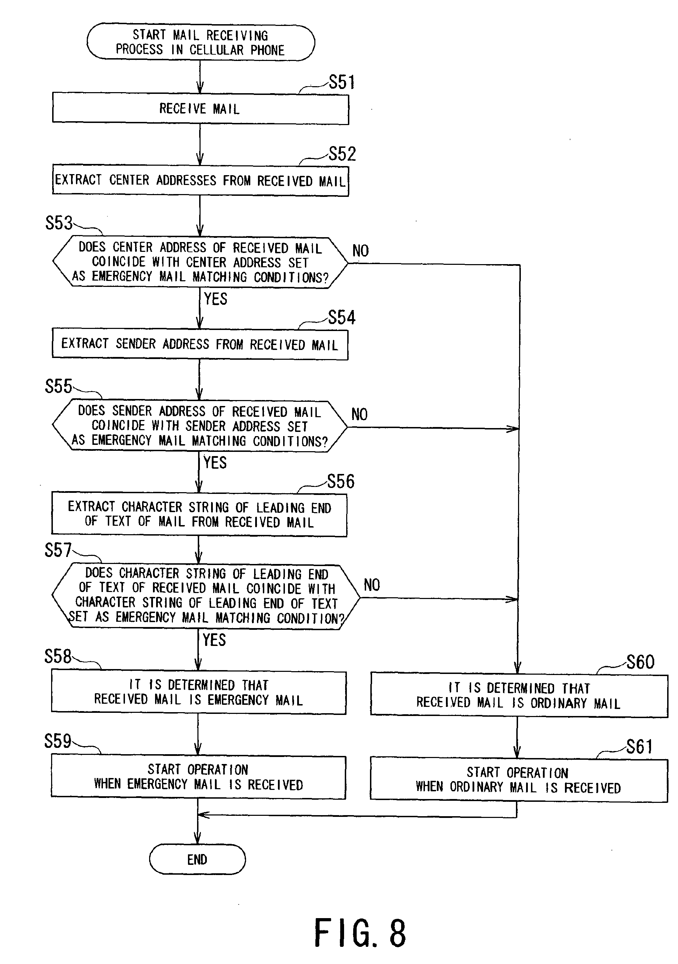

A mail receiving process in the second type will be explained referring to a flowchart of Fig. 8. In the mail receiving process, the cellular phone 2 on the reception side receives an emergency mail in which the matching conditions are included and ordinary mails other than the emergency mail by discriminating the emergency mail from the ordinary mails. Since processes at steps S51 to S61 of Fig. 8 are basically the same as those at steps S21 to S31 of Fig. 7, explanation of overlapping portions is omitted and only the processes at steps S52 to S53 will be explained.

At step S52, the control unit 41 extracts a center address from a received mail. The control unit 41 determines at step S23 whether or not the extracted center address coincides with the center address which is previously set as the emergency mail matching conditions. The center address set as the emergency mail matching conditions is stored in a USIM card and the storage device 42. Although a mail is determined as an emergency mail if all the plurality of emergency mail matching conditions coincide with the conditions of the mail, it may be determined as the emergency mail if any one of the emergency mail conditions coincide with the conditions of the mail.

Incidentally, it is supposed that even if the respective autonomies transmit a notification of occurrence of a disaster from the transmission terminal 8 to the cellular phone 2 of a user in a bedridden state due to a poor health condition of a body, when the cellular phone 2 does not exist in a location which the user can access, the user cannot confirm the emergency mail as to the notification of occurrence of a disaster received by the cellular phone 2. That is, it cannot be necessarily said that even if the emergency mail is transmitted from the transmission terminal 8 to the cellular phone 2, the occurrence of a disaster can be securely transferred. Thus, in order to determine whether or not the user confirms the emergency mail, if the user executes a confirming operation, a transmission confirmation mail corresponding to the emergency mail may be transmitted from the cellular phone 2 on the reception side. A transmission confirmation mail transmitting process in the cellular phone 2 on the reception side, which is executed using the method if an emergency mail is received, will be explained.

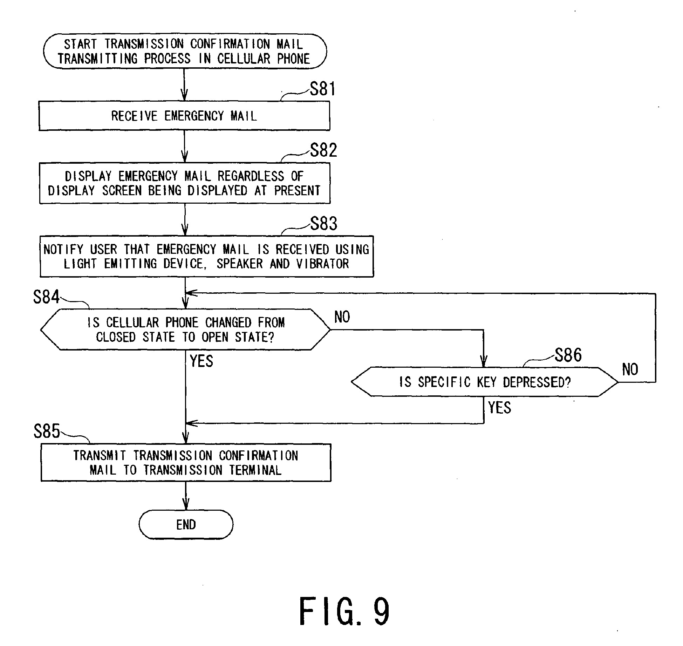

The transmission confirmation mail transmitting process in the cellular phone 2 on the reception side shown in Fig. 4 will be explained referring to a flowchart of Fig. 9. Since the processes at steps S81 to S83 of Fig. 9 are the same as those at steps S1 to S3 of Fig. 6, the explanation thereof is omitted to avoid repeated explanation.

The control unit 41 determines at step S84 whether or not the cellular phone 2 is changed from the closed state to the open state using the magnetic sensors 19a to 19d. If the control unit 41 determine at step S84 that the cellular phone 2 is changed from the closed state to the open state, the control unit 41 determines at step S85 that the user has executed an emergency mail confirming operation after the emergency mail is received. Accordingly, the control unit 41 transmits a transmission confirmation mail corresponding to the emergency mail to the transmission terminal 8 through the antenna 31 and the transmission circuit 35, using the transmission source address included in the emergency mail from the transmission terminal 8.

In contrast, if the control unit 41 determine at step S84 that the cellular phone 2 is not changed from the closed state to the open state, the control unit 41 determines at step S86 whether or not a specific key (a key which independently emits light by being lit from behind the specific key by the light emitting device 51 if the emergency mail is received, i.e. a key of "1") of the operation keys 14 is depressed by the user. A process for lighting the specific key is executed approximately at the same time when the emergency mail is received.

If the control unit 41 determine at step S86 that the specific key of the operation keys 14 is not depressed by the user, the process returns to step S84, and the process at step S84 and the processes at subsequent steps are repeatedly executed. In contrast, if the control unit 41 determine at step S86 that the specific key of the operation keys 14 is depressed by the user, the control unit 41 determines that the user has executed the emergency mail confirming operation after the emergency mail is received, and executes the transmission confirmation mail transmitting process at step S85.

With this operation, the autonomies, which manage the transmission terminal 8, can not only grasp whether or not the user having the cellular phone 2 on the reception side has confirmed the received emergency mail after the emergency mail is transmitted but also can grasp whether or not the emergency mail has been securely transmitted to the cellular phone 2 of the user. Accordingly, the autonomies can securely transmit the occurrence of a disaster to the user.

In Fig. 6 or Fig. 9, the emergency mail is displayed on the main display 17 after the emergency mail is received. However, it is considered inconvenient to the user to continuously display the emergency mail on the main display 17 forever at the highest priority regardless that the user has confirmed the emergency mail. To cope with the above problem, information as to a time limit of display on a screen may be added to an emergency mail transmitted from the transmission terminal 8 and the emergency mail may be displayed on the main display 17 by the cellular phone 2 on the reception side based on the information as to the time limit of display on the screen. An emergency mail receiving process in the cellular phone 2 using the method will be explained below.

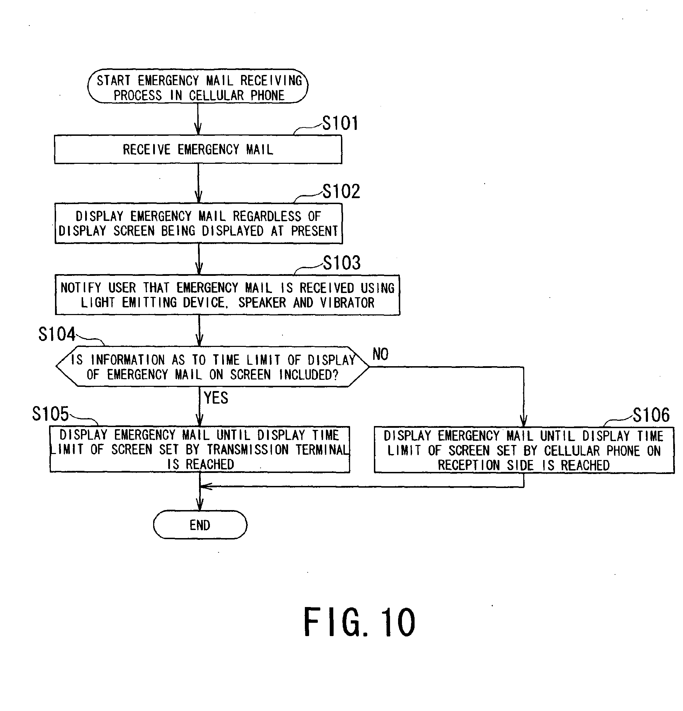

The emergency mail receiving process in the cellular phone 2 shown in Fig. 4 will be explained referring to a flowchart of Fig. 10. Since the processes at steps S101 to S103 of Fig. 10 are the same as those at steps S1 to S3 of Fig. 6, the explanation thereof is omitted to avoid repeated explanation.

The control unit 41 determines at step S104 whether or not the information as to the time limit of display of the emergency mail on a screen (information as to a display time limit until two days pass) is included in a received emergency mail. When the control unit 41 determines at step S104 that the information as to the time limit of display of the emergency mail on the screen is included in the received emergency mail, the control unit 41 causes at step S105 the main display 17 to continuously display the emergency mail at the highest priority based on the information as to the time limit of display of the emergency mail on the screen until the display time limit of the screen is reached. Thereafter, if the time limit of display on the screen is reached, the emergency mail displayed on the main display 17 is deleted.

If the control unit 41 determines at step S104 that the information as to the time limit of display of the emergency mail on the screen is not included in the received emergency mail, the control unit 41 causes at step S106 the main display 17 to continuously display the emergency mail at the highest priority based on the information as to the time limit of display of the emergency mail on the screen, which is previously set to the cellular phone 2 on the reception side, until the display time limit of the screen is reached. Thereafter, if the time limit of display on the screen set to the cellular phone 2 is reached, the emergency mail displayed on the main display 17 is deleted.

Note that the information as to the time limit of display of the emergency mail on the screen is not included in the emergency mail as well as the information as to the time limit of display of the emergency mail on the screen is not set to the cellular phone 2 on the reception side, the displayed emergency mail may be deleted at once after the emergency mail confirming operation (the processes at steps S84 to S86 of Fig. 9) is executed by the user.

Incidentally, if the cellular phone 2 does not exist in a location which the user can access as described above, it is supposed that the user cannot confirm the emergency mail as to the notification of occurrence of a disaster received by the cellular phone 2. Accordingly, the occurrence of a disaster is notified to the user by combining various types of means as shown at step S3 of Fig. 6. However, when the vibrator 51 is continuously vibrated or the light emitting device 54 is continuously lit for an excessively long period of time, it is considered that power consumption increases with a result that a power supply of the cellular phone 2 is finally turned OFF. In this case, it is not effective to vibrate the vibrator 51 and to light the light emitting device 54 for a long period of time from a view point of how effectively and securely notifying the user of the occurrence of a disaster, and it is more effective than the method described above to effectively notify the user of the occurrence of a disaster as necessary while more increasing the life of the battery of the cellular phone 2. Thus, if the emergency mail is not confirmed by the user, the vibrator 51 vibrates and the light emitting device 54 emits light each predetermined period of time. Thereafter, the vibrator 51 and the light emitting device 54 stop once. With this operation, the user can be effectively and securely notified of the occurrence of a disaster. An emergency mail receiving process using the method will be explained below.

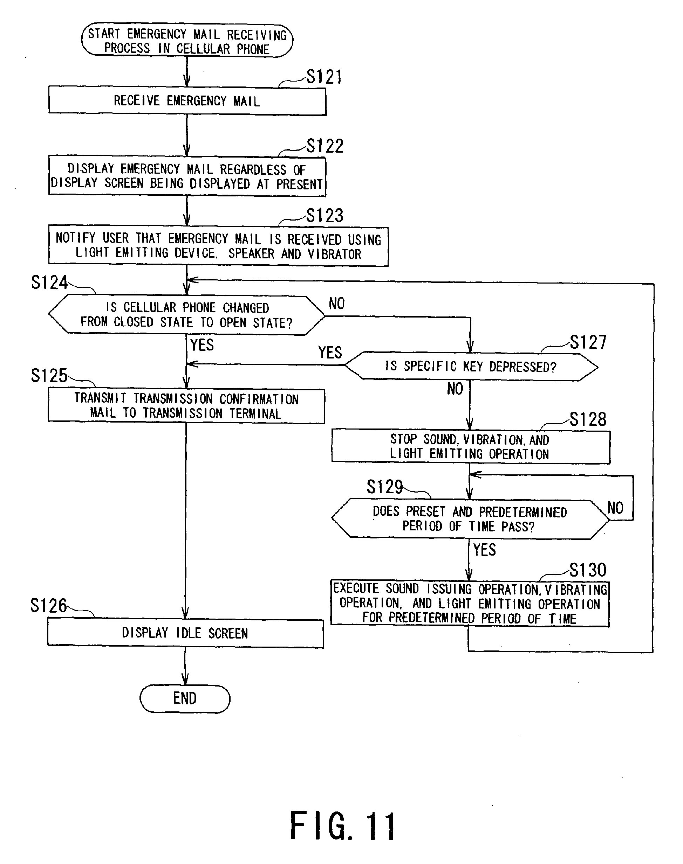

The emergency mail receiving process in the cellular phone 2 shown in Fig. 4 will be explained referring to a flowchart of Fig. 11. Since the processes at steps S121 to S125 and S127 of Fig. 11 are the same as those at steps S81 to S85 of Fig. 9, the explanation thereof is omitted to avoid repeated explanation.

At step S126, after the transmission confirmation mail is transmitted, the control unit 41 controls the main display 17 and causes the main display 17 to delete the displayed emergency mail as well as to display the idle screen. The main display 17 deletes the displayed emergency mail as well as displays the idle screen according to a control of the control unit 41.

If the control unit 41 determines at step S127 that a specific key of the operation keys 14 is not depressed by the user, the control unit 41 stops once at step S128 the special reception sound issued by the speaker 50, the vibration by the vibrator 51, and the light emitting operation by the light emitting device 54. The control unit 41 determines at step S129 whether or not a preset and predetermined period of time (for example, ten minutes) passed using the clock circuit 47 after the notifying operation at step S128 was stopped after the emergency mail was received and waits until it determines that the preset and predetermined period of time passed. If the control unit 41 determines at step S128 that the preset and predetermined period of time has passed since the notifying operation is stopped, the control unit 41 causes at step S130 the speaker 50 to issue the special reception sound, the vibrator 51 to vibrate and the light emitting device 54 to execute the light emitting operation, for a predetermined period of time (for example, three minutes). If a predetermined period of time passes after the operation was resumed, the notification operation is stopped again, and thereafter the process goes to step S124. Note that determination processes at steps S124 and step S127 may be executed in parallel until a predetermined period of time passes after the operation is resumed.

With this operation, the cellular phone 2 can effectively and securely notify the user of the occurrence of a disaster. As to the special reception sound issued by the speaker 50, the vibration by the vibrator 51, the light emitting operation executed by the light emitting device 54, the notifying operation executed by them may increase each predetermined period of time (for example, ten minutes) or may periodically increase or decrease after the notifying operation starts. That is, the notifying operation is set from the view point of how effectively and securely notifying the user of the occurrence of a disaster.

Although the special reception sound by the speaker 50, the vibration by the vibrator 51, and the light emitting operation by the light emitting device 54 are explicitly described as the notifying operation of the occurrence of a disaster to the user, a wall paper of the idle screen may be changed to a dedicated wall paper if the emergency mail is displayed on the main display 17. An emergency mail receiving process using the method will be explained below.

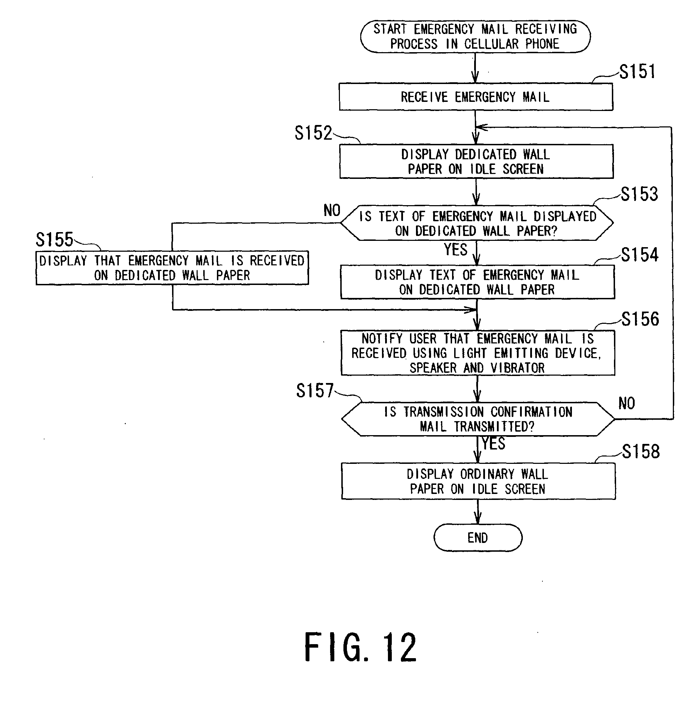

Other mail receiving process in the cellular phone 2 on the reception side shown in Fig. 4 will be explained referring to a flowchart of Fig. 12.

Since the processes at steps S151 and S156 of Fig. 12 are the same as those at steps S1 to S3 of Fig. 6, the explanation thereof is omitted to avoid repeated explanation.

At step S152, the control unit 41 controls the main display 17 and causes the main display 17 to change the wall paper displayed on the idle screen to the dedicated wall paper used when an emergency mail is received and to display the dedicated wall paper thereon. The main display 17 changes the wall paper displayed on the idle screen to the dedicated wall paper used when the emergency mail is received and displays the dedicated wall paper thereon according to the control of the control unit 41. An entirely red wall paper is preferable as the dedicated wall paper. The control unit 41 determines at step S153 whether or not it is previously set to display a text of an emergency mail on the dedicated wall paper.

If the control unit 41 determines at step S153 that it is previously set to display the text of the emergency mail on the dedicated wall paper, the control unit 41 controls the main display 17 at step S154 and causes the main display 17 to display the text of the emergency mail on the dedicated wall paper. At the time, the text of the emergency mail (for example, "disaster occurs at *** !!") may be displayed by being automatically scrolled using animations (motion video data). At the time, a character string of the text of the emergency mail displayed on the dedicated wall paper may be a colored character string or a character string having a character size larger than an ordinary character size. With this arrangement, since the user can confirm the contents of the emergency mail without an operation, convenience of the cellular phone 2 can be improved in emergency.

In contrast, if the control unit 41 determines at step S153 that it is not previously set to display the text of the emergency mail on the dedicated wall paper, the control unit 41 controls at step S155 the main display 17 and causes the main display 17 to display that an emergency mail is received, on the dedicated wall paper using an icon.

At step S157, the control unit 41 determines whether or not a transmission confirmation mail has been transmitted. That is, the control unit 41 determines whether or not the cellular phone 2 is changed from the closed state to the open state or whether or not a specific key is depressed to thereby determines whether or not the transmission confirmation mail has been transmitted to the transmission terminal 8 thereafter (likewise the processes at steps 84 and S86 of Fig. 9). If the control unit 41 determines at step S157 that the transmission confirmation mail has not been transmitted, the process returns to step S152 at which the processes at step S152 and subsequent steps are repeatedly executed.

In contrast, if the control unit 41 determines at step S157 that the transmission confirmation mail has been transmitted, the control unit 41 controls at step S158 the main display 17 and causes the main display 17 to display a preset ordinary wall paper on the idle screen. The main display 17 displays the preset ordinary wall paper on the idle screen according to the control of the control unit 41.

With this operation, the occurrence of a disaster can be securely notified to the user.

Incidentally, if an emergency mail is received by the cellular phone 2, the contents of a text of the emergency mail may be read aloud in consideration of a user in a bedridden state due to a poor health condition of a body and a user having a poor eyesight. A mail receiving process using the method will be explained below.

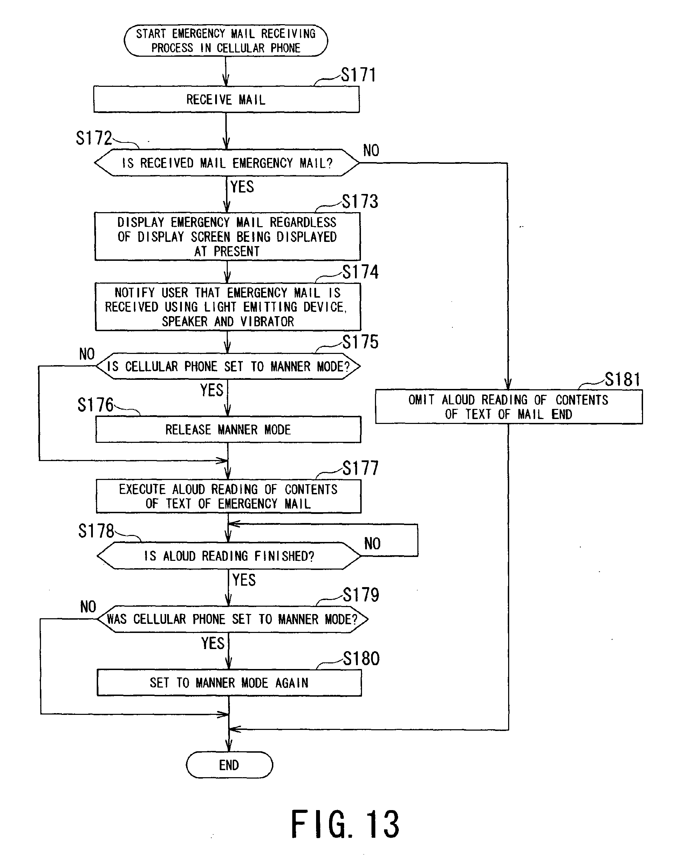

Other mail receiving process in the cellular phone 2 on the reception side shown in Fig. 4 will be explained referring to a flowchart of Fig. 13.

At step S171, the cellular phone 2 receives mails (an emergency mail from the transmission terminal managed by the respective autonomies or ordinary mails other than the emergency mail) through the antenna 31 and the receiving circuit 33, and the received mails are output to the control unit 41. At step S172, the control unit 41 determines whether or not the received mail is the emergency mail based on a sender address and a subject included in the received mails (likewise the emergency mail determination process shown in Fig. 7 or Fig. 8). If the control unit 41 determines at step S172 that the received mail is the emergency mail, an emergency mail display process and an emergency mail notifying process are executed at steps S173 and S174 (likewise the processes at steps S2 and S3 of Fig. 6).

At step S175, the control unit 41 determines whether or not the cellular phone 2 is previously set to a manner mode. If the control unit 41 determines at step S175 that the cellular phone 2 is previously set to the manner mode, the control unit 41 releases the previously set manner mode at step S176. When the control unit 41 determines at step S175 that the cellular phone 2 is not previously set to the manner mode, the process at step S176 is skipped.

At step S177, the control unit 41 executes reading by a voice of the contents of a text of the emergency mail. Specifically, the control unit 41 converts the text data included in the contents of the text of the emergency mail to audio data and outputs a voice based on the converted audio data through the PCM codec 38 and speaker 50. A voice of "a disaster occurs at *** " is output from the speaker 50.

The control unit 41 determines at step S178 whether or not a voice output (reading by a voice) is finished through the PCM codec 38 and the speaker 50 and waits until it is determined that the voice output (reading by a voice) is finished through the PCM codec 38 and speaker 50. If the control unit 41 determines at step S178 that the voice output (reading by a voice) is finished through the PCM codec 38 and speaker 50, the control unit 41 determines at step S179 whether or not the cellular phone 2 is set to the manner mode.

If the control unit 41 determines at step S179 that the cellular phone 2 was set to the manner mode, the control unit 41 sets the cellular phone 2 to the manner mode again at step S180. In contrast, if the control unit 41 determines at step S179 that the cellular phone 2 was not set to the manner mode, the process at step S180 is skipped. With this operation, the user can grasp the occurrence of a disaster by confirming an emergency mail making use of the sense of hearing.

In contrast, if the control unit 41 determines at step S172 that the received mail does not include the emergency mail, since the received mail is the ordinary mail, the control unit 41 omits to read aloud the contents of the mails at step S181.

Incidentally, if the cellular phone 2 does not exist in a location which the user can access as described above, it is supposed that the emergency mail as to the notification of occurrence of a disaster received by the cellular phone 2 cannot be seen. In this case, the special reception sound may be output in larger volume to more securely notify the user of the occurrence of the disaster. If, the cellular phone 2 is connected to a charger through a USB or a connector, the charger may be controlled such that the special reception sound is output using a speaker previously disposed to the charger. An emergency mail receiving process using the method will be explained below.

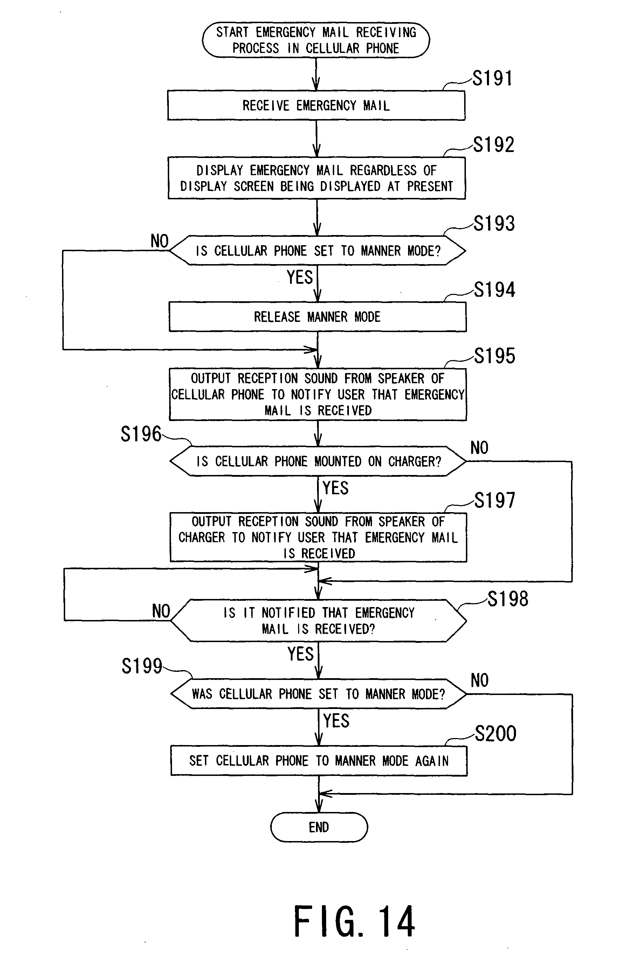

Other emergency mail receiving process executed by the cellular phone 2 on the reception side shown in Fig. 4 will be explained referring to a flowchart of Fig. 14. Since the processes at steps S191 and S192 of Fig. 14 are the same as those at steps S1 to S2 of Fig. 6, the explanation thereof is omitted to avoid repeated explanation.

At step S193, the control unit 41 determines whether or not the cellular phone 2 is previously set to the manner mode. If the control unit 41 determines at step S195 that the cellular phone 2 is previously set to the manner mode, it releases the previously set manner mode at step S194. If the control unit 41 determines at step S193 that the cellular phone 2 is not previously set to the manner mode, the process at step S194 is skipped.

At step S195, the control unit 41 reads out data, which is previously stored in the storage device 42, as to the special reception sound if an emergency mail is received and causes the special reception sound to be output through the PCM codec 38 and speaker 50 based on the read-out data as to the special reception sound when the emergency mail is received to notify the user that an emergency mail is received. The control unit 41 determines at step S196 whether or not the charger (not shown) 2 is mounted on cellular phone through the external port 55.

When the control unit 41 determines at step S196 that the charger is mounted on the cellular phone 2 through the external port 55, it causes at step S197 the special reception sound to be output using the speaker, which is previously disposed to the charger and can output a sound in a large volume. That is, the control unit 41 transfers the data as to the special reception sound when the emergency mail is received to the speaker of the charger through the external port 55 and causes the speaker of the charger to output the special reception sound based on the data as to the special reception sound when the emergency mail is received. In contrast, when the control unit 41 determines at step S196 that the charger is mounted on the cellular phone 2 through the external port 55, the process at step S197 is skipped.

The control unit 41 determines at step S198 whether or not a notification to the user that the emergency mail is received is finished. If the output of the special reception sound from the speaker of the charger is not completed, it is determined that the notification to the user that the emergency mail is received is not finished. If the control unit 41 determines at step S198 that the notification to the user that the emergency mail is received is finished, the control unit 41 determines at step S199 whether or not the cellular phone 2 was set to the manner mode. If the control unit 41 determines at step S199 that the cellular phone 2 was set to the manner mode, the control unit 41 sets the cellular phone 2 to the manner mode again at step S200. In contrast, the control unit 41 determines at step S199 that the cellular phone 2 was not set to the manner mode, the process at step S200 is skipped.

With this operation, an occurrence of a disaster can be securely notified when an emergency mail is received in a noisy environment and if a user having a poor sense of hearing.

Note that an optical character string can be added to any of the first and second type emergency mails. For example, a character string as to whether or not a remote monitoring mode is activated after an emergency mail is received, a character string as to whether or not a voice phone communication or a TV phone communication is made by return after the emergency mail is received and a character string as to whether or not a return mail is transmitted after the emergency mail is received are added.

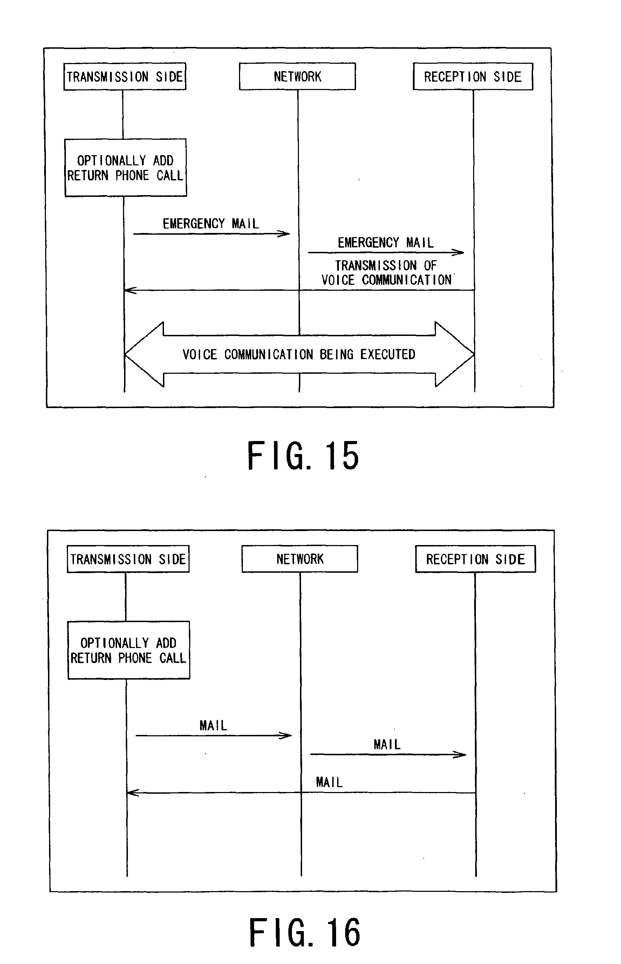

With this operation, if the character string as to whether or not the voice phone communication or the TV phone communication is made by return after the emergency mail is received is added to the emergency mail, the voice phone communication or the TV phone communication can be automatically made by return to the transmission terminal 8 after the emergency mail is received by the cellular phone 2 on the reception side as shown in Fig. 15. Accordingly, after the emergency mail is transmitted, the user can make contact with a transmission source without executing any operation. Further, as shown in Fig. 16, if the character string as to whether or not the return mail is transmitted after the emergency mail is received is added to the emergency mail, the return mail can be automatically transmitted to the transmission terminal 8 after the emergency mail is received by the cellular phone 2 on the reception side. An emergency mail transmitting process in the transmission terminal 8 using the method will be explained below. Note that although the following explanation explicitly describes a case in which a remote monitoring is activated to simplify the explanation, a case in which a TV phone communication is executed by return or a return mail is transmitted is basically the same as the case described above.

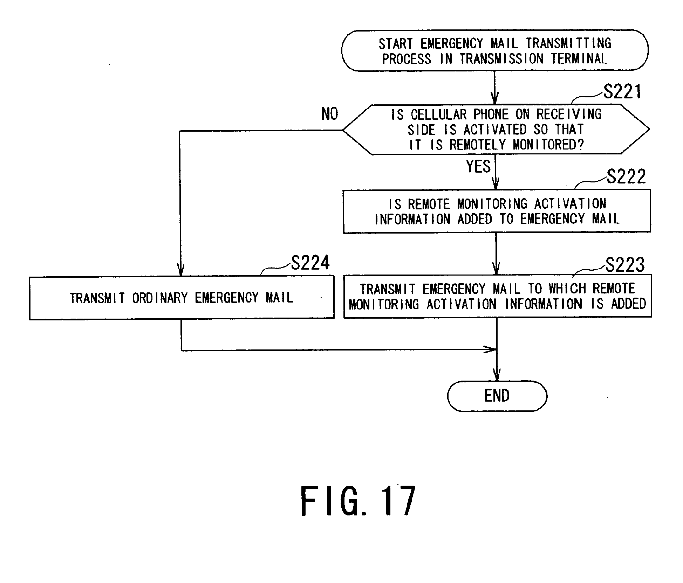

The emergency mail transmitting process in the transmission terminal 8 shown in Fig. 1 will be explained referring to a flowchart of Fig. 17.

The transmission terminal 8 determines at step S221 whether or not an instruction for activating the cellular phone 2 on the reception side so that the cellular phone 2 is remotely monitored is accepted by an operator who belongs to, for example, an autonomy to thereby determine whether or not the cellular phone 2 on the reception side is activated so that it is remotely monitored. If the transmission terminal 8 determines at step S221 that the cellular phone 2 on the reception side is activated so that the cellular phone 2 is remotely monitored, the transmission terminal 8 adds at step S222 remote monitoring activation information (i.e. information related to a character string as to whether or not the remote monitoring mode is activated after an emergency mail is received) to the emergency mail in order to activate the cellular phone 2 on the reception side so that the cellular phone 2 is remotely monitored. At step S223, the transmission terminal 8 transmits an emergency mail to which the remote monitoring activation information is added to the cellular phone 2 of the user through the public network 4 and the network 6. In contrast, the transmission terminal 8 determines at step S221 that the cellular phone 2 on the reception side is not activated so that the cellular phone 2 is remotely monitored, the transmission terminal 8 transmits an ordinary emergency mail to which the remote monitoring activation information is not added to the cellular phone 2 of the user through the public network 4 and the network 6.

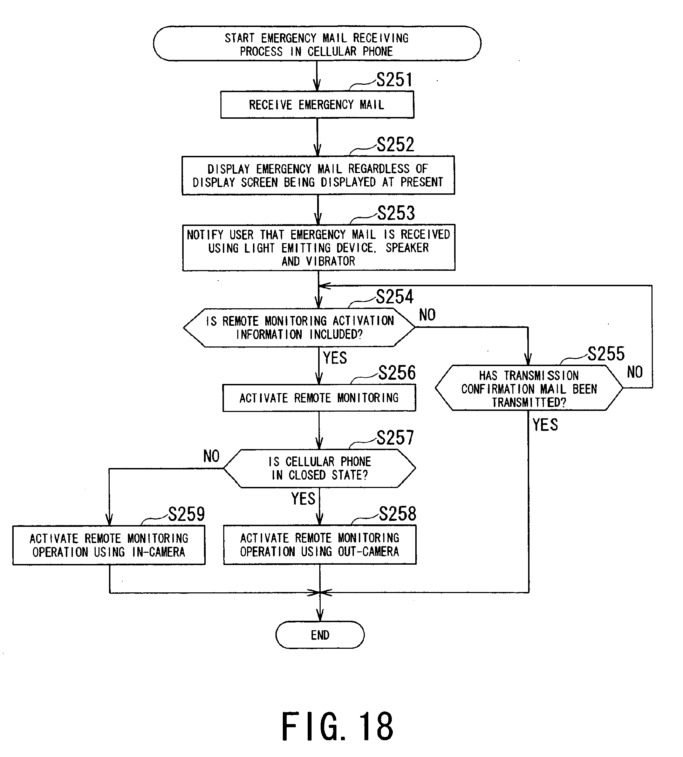

Other emergency mail receiving process in the cellular phone 2 shown in Fig. 4 will be explained referring to a flowchart of Fig. 18. Note that since the processes at steps S251 to S253 of Fig. 18 are the same as those at steps S1 to S3 of Fig. 6, the explanation thereof is omitted to avoid repeated explanation.

The control unit 41 determines at step S254 whether or not a received emergency mail includes the remote monitoring activation information (i.e. information related to a character string as to whether or not the remote monitoring mode is activated after an emergency mail is received). When the control unit 41 determines at step S254 that the remote monitoring activation information is not included in the received emergency mail, the control unit 41 determines at step S255 whether or not a transmission confirmation mail has been transmitted. That is, the control unit 41 determines whether or not the cellular phone 2 is changed from the closed state to the open state or a specific key is depressed, in order to thereby determine whether or not the transmission confirmation mail has been transmitted to the transmission terminal 8 thereafter (likewise the processes at steps 84 and S86 of Fig. 9). If the control unit 41 determines at step S157 that the transmission confirmation mail has not been transmitted, the process returns to step S 254 at which the processes at step S254 and subsequent steps are repeatedly executed.

If the control unit 41 determines at step S254 that the received emergency mail includes the remote monitoring activation information, the control unit 41 activates the remote monitoring based on the remote monitoring activation information included in the emergency mail. Specifically, the control unit 41 starts up a TV phone communication function through the antenna 31 and the transmission circuit 35 and performs an outgoing call by a TV phone communication based on the phone number information of a transmission destination previously registered to the cellular phone 2.

The control unit 41 determines at step S257 whether or not the cellular phone 2 is in the closed state using the magnetic sensors 19a to 19d. If the control unit 41 determines at step S257 that the cellular phone 2 is in the closed state, the control unit 41 controls at step S258 the CCD camera 20-2 as the out-camera and starts a remote monitoring operation by image picking-up using the CCD camera 20-2. That is, the signals of images sequentially picked up by the CCD camera 20-2 are digitized, compressed and encoded by the compression/decompression processor 37, and then transmitted to the transmission terminal 8 through the antenna 31 and the transmission circuit 35. In contrast, when the control unit 41 determines at step S257 that the cellular phone 2 is in the open state, the control unit 41 controls at step S259 the CCD camera 20-1 as the in-camera and starts the remote monitoring operation by image picking-up using the CCD camera 20-1. That is, the signals of images sequentially picked up by the CCD camera 20-1 are digitized, compressed and encoded by the compression/decompression processor 37, and then transmitted to the transmission terminal 8 through the antenna 31 and the transmission circuit 35.

With this operation, images in the periphery of the user can be easily obtained by the transmission source of the emergency mail in emergency.

It is needless to say that timing of transmission may be set if the user executes an emergency mail confirming operation. Further, although the out-camera and the in-camera are selectively used depending on a state of the cellular phone 2 in the process of Fig. 18, they may be selectively used by an instruction of the user how they are used selectively if the cellular phone 2 receives the emergency mail. Note that the picked-up images may be transmitted to the transmission terminal 8 using a communication means such as a wireless LAN.

Further, setting of an automatic response of the TV phone on the cellular phone 2 side may be changed based on transmission source phone number information added to an emergency mail in place of starting the TV phone to a transmission source previously set to the cellular phone 2.

With this operation, even if a transmission source of the TV phone is restricted at an ordinary time in order to prevent unauthorized photographing and the like, a phone call can be started by the TV phone by positively releasing the restriction from the transmission terminal 8 that transmits the transmission source phone number information. Further, even if the TV phone is not set to the automatic response on the cellular phone 2 side, it is possible to cause the TV phone to execute the automatic response by the transmission source phone number information from the transmission terminal 8.

Incidentally, after the cellular phone 2 receives an emergency mail in emergency, the emergency mail is displayed on the main display 17. However, if a voice incoming call arrives while the emergency mail is being displayed, a voice communication may be started by the speaker 50 in a hands-free mode. An emergency mail receiving process using the method will be explained below.

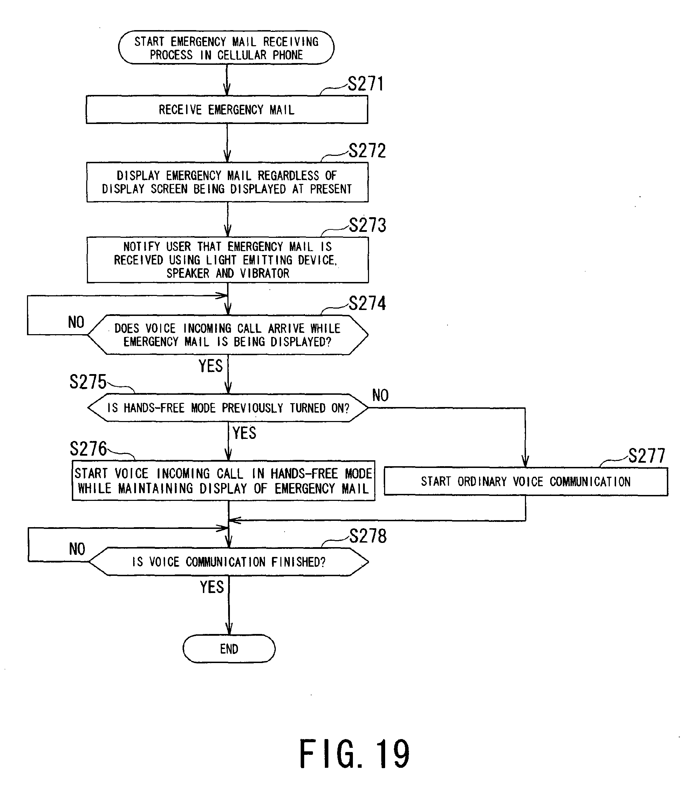

Other emergency mail receiving process in the cellular phone 2 shown in Fig. 4 will be explained referring to a flowchart of Fig. 19. Note that the processes at steps S271 to S273 of Fig. 19 are same as those at steps S1 to S3 of Fig. 6, the explanation thereof is omitted to avoid repeated explanation.

The control unit 41 determines at step S274 whether or not a voice incoming call arrives while an emergency mail is being displayed and waits until the control unit 41 determines that the voice incoming call arrives while the emergency mail is being displayed. When the control unit 41 determines at step S274 that the voice incoming call arrives while the emergency mail is being displayed, the control unit 41 determines at step S275 whether or not the cellular phone 2 is previously set to the hands-free mode. If the control unit 41 determines at step S275 that the cellular phone 2 is previously set to the hands-free mode, it starts at step S276 a voice communication in the hands-free mode through the PCM codec 38 and the speaker 50 while maintaining the emergency mail displayed on the main display 17. In contrast, if the control unit 41 determines at step S275 that the cellular phone 2 is not previously set to the hands-free mode, it starts an ordinary voice communication through the PCM codec 38, the telephone receiver 18, and the like. Thereafter, the control unit 41 determines at step S278 whether or not the voice communication is finished by the user who depresses a ring-off key and waits until the control unit 41 determines that the voice communication is finished. When the control unit 41 determines at step S278 that the voice communication is finished, the voice communication process is finished.

With this operation, if a voice incoming call arrives while an emergency mail is being displayed, even if the user cannot operate the cellular phone 2, the cellular phone 2 can execute a voice communication in the hands-free mode. Note that, at steps S275 to step S277, whether a voice communication in the hands-free mode is executed or an ordinary voice communication is executed is changed depending on whether or not the cellular phone 2 is previously set to the hands-free mode. However, if a voice incoming call arrives while an emergency mail is being displayed, the voice communication in the hands-free mode may be executed at all times.

Note that when a voice incoming call arrives in course of displaying the contents of an emergency mail, if the main display 17 shifts to a reception screen at once, the emergency mail, which is being confirmed, is set to a non-display mode and the contents thereof cannot be sufficiently confirmed. In contrast, if a voice incoming call relates to an important subject, it is considered that the voice incoming call arrives frequently in a short period of time or is continuously made for a long period of time. Thus, if the cellular phone 2 is in a process of receiving an emergency mail, the main display 17 is not shifted to the reception screen except that a voice incoming call arrives frequently in a short period of time or is continuously made for a long period of time. With this operation, the shift of the screen of the main display 17 can be preferably prevented while the contents of an emergency mail is being confirmed. An emergency mail receiving process using the method will be explained below.

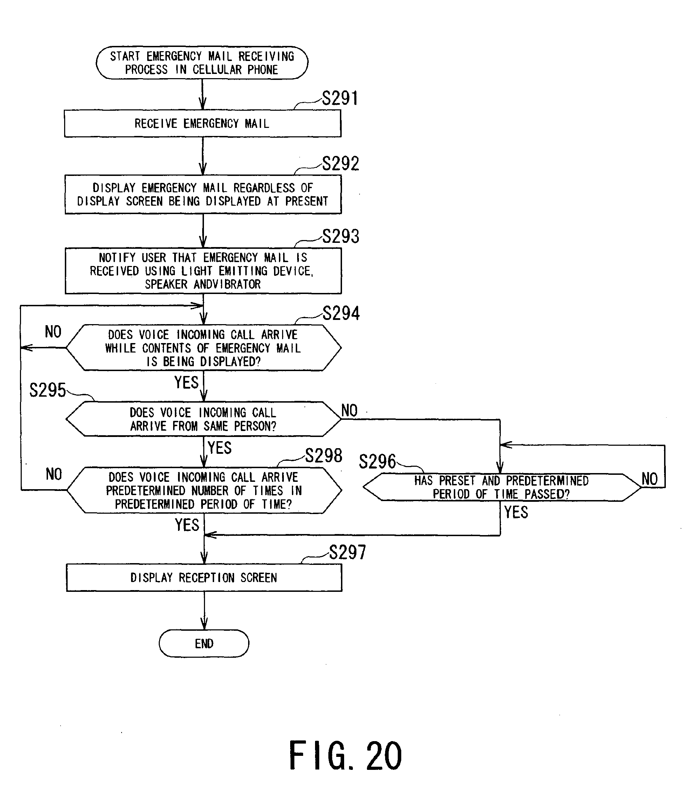

Other emergency mail receiving process in the cellular phone 2 shown in Fig. 4 will be explained referring to a flowchart of Fig. 20. Note that since the processes at steps S291 to S293 of Fig. 20 are the same as those at steps S1 to S3 of Fig. 6, the explanation thereof is omitted to avoid repeated explanation.

The control unit 41 determines at step S294 whether or not a voice incoming call arrives while an emergency mail is being displayed and waits until the control unit 41 determines that the voice incoming call arrives while the emergency mail is being displayed. If the control unit 41 determines at step S294 that the voice incoming call arrives while the emergency mail is being displayed, the control unit 41 determines at step S295 whether or not the voice incoming call arrives from the same person (the same transmission source). If the control unit 41 determines at step S295 that the voice incoming call arrives from the same person, the control unit 41 determines at step S298 whether or not the voice incoming call arrives from the same person (the same transmission source) a predetermined number of times (for example, three times) or more in a predetermined period of time (for example, five minutes). If the control unit 41 determines at step S298 that the voice incoming call arrives from the same person the predetermined number of times in the predetermined period of time, the control unit 41 causes at step S297 the main display 17 to display the reception screen. Note that an arrival notification process may be executed in a manner other than the manner of displaying the arrival information.

If the control unit 41 determines at step S298 that the voice incoming call does not arrive from the same person the predetermined number of times in the predetermined period of time, the process returns to step S294. In contrast, if the control unit 41 determines at step S295 that the voice incoming call does not arrive from the same person, it determines at step S296 whether or not a preset and predetermined period of time (for example, three minutes and the like) has passed from the arrival of the voice incoming call using the clock circuit 47 and waits until the control unit 41 determines that the preset and predetermined period of time has passed from the arrival of the voice incoming call. If the control unit 41 determines at step S296 that the preset and predetermined period of time has passed from the arrival of the voice incoming call, the process goes to step S297 at which a reception screen display process is executed. Note that the reception screen may be displayed and the reception notification may be executed only when a preset period of time has passed from the arrival of the voice incoming call from the same person.

With this operation, the shift of the screen of the main display 17 can be preferably prevented while the contents of an emergency mail are being confirmed.

Further, it is also considered that the user stays in emergency in a place other than a place where the cellular phone 2 exists (for example, a place where a fixed phone is mounted in the user's home). In this case, an emergency mail, which is received by the cellular phone 2, may be transmitted from the cellular phone 2 to the fixed phone. An emergency mail receiving process using the method will be explained below.

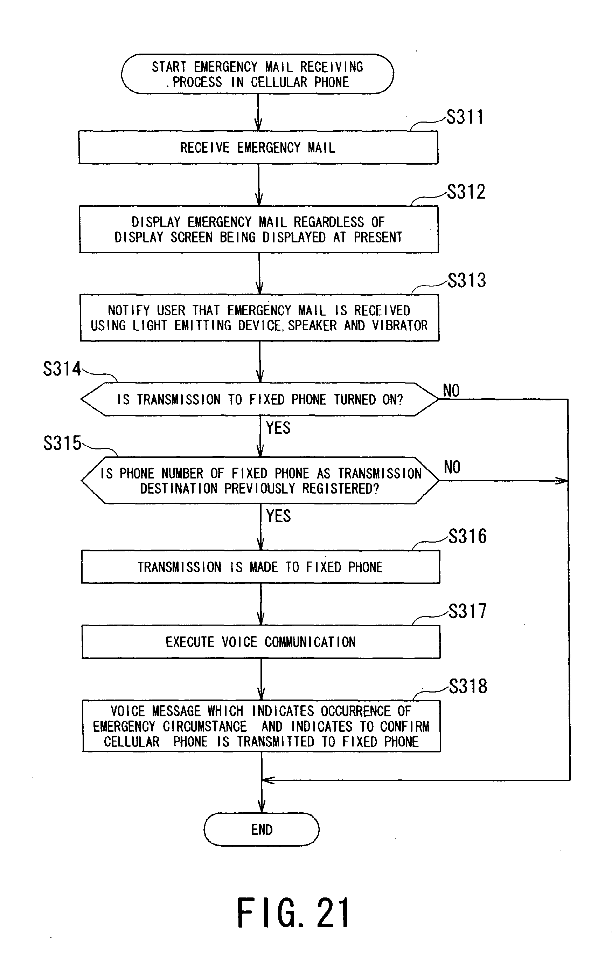

Other emergency mail receiving process in the cellular phone 2 shown in Fig. 4 will be explained referring to a flowchart of Fig. 21. Note that since the processes at steps S311 to S313 of Fig. 21 are the same as those at steps S1 to S3 of Fig. 6, the explanation thereof is omitted to avoid repeated explanation.

The control unit 41 determines at step S314 whether or not transmission to a fixed phone is set to ON (effective). If the control unit 41 determines at step S314 that the transmission to the fixed phone is set to ON (effective), the control unit 41 determines at step S315 whether or not the phone number of the fixed phone as a transmission destination is previously registered. If the control unit 41 determines at step S315 that the phone number of the fixed phone as the transmission destination is previously registered, the control unit 41 performs at step S316 outgoing call to the fixed phone whose phone number is previously registered through the antenna 31 and the transmission circuit 35. Thereafter, the control unit 41 starts at step S317 a communication process between the cellular phone 2 and the fixed phone as the transmission destination. At step S318, the control unit 41 reads out data as to a voice message, which is previously stored in the storage device 42 and transferred to the fixed phone in emergency, and transmits the read data as to the voice message to the fixed phone. The data as to the voice message includes a voice message as to occurrence of an emergency circumstance ("disaster occurs"), a voice message indicating to confirm the cellular phone 2 ("please confirm cellular phone") and the contents of a text of an emergency mail (disaster occurs at ***]). In contrast, if the control unit 41 determines at step S314 that the transmission to the fixed phone is not set to ON (effective) and if the control unit 41 determines at step S315 that the phone number of the fixed phone as the transmission destination is not previously registered, the processes at steps S316 to S318 are skipped.

Note that the transmission to the fixed phone may be set such that it is appropriately turned ON or OFF according to the preference of the user as well as the transmission destination may be changed.

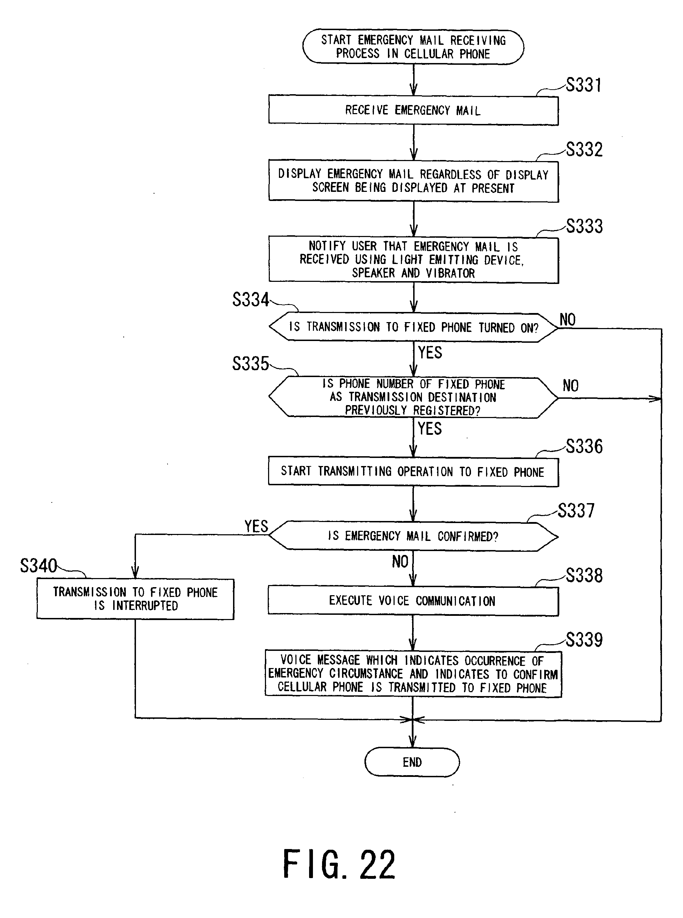

Further, when the emergency mail confirming operation is executed by the user who operates the cellular phone 2 after the transmission to the fixed phone is started at step S336 as shown in a flowchart of Fig. 22, the control device interrupts at step S340 the transmission which is already executed to the fixed phone 41 by controlling the antenna 31 and the transmission circuit 35. With this operation, a wasteful transmission process to the fixed phone can be avoided.

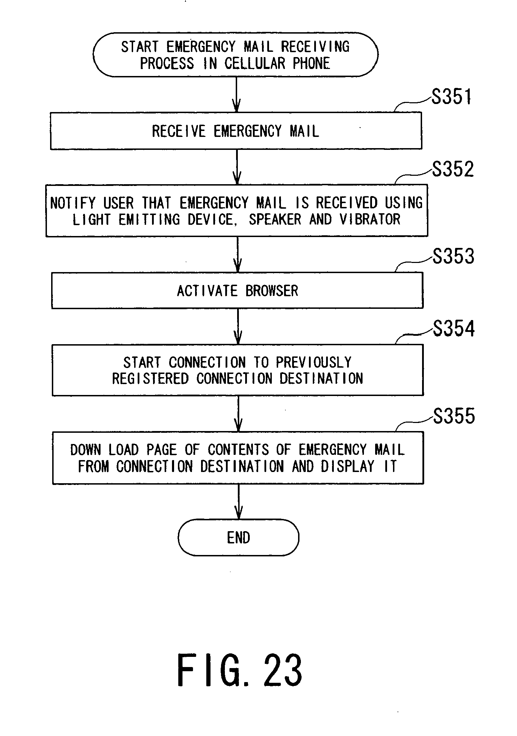

Note that if an emergency mail is of the second type, a browser function may be automatically activated after an emergency mail is received by the cellular phone 2 and the cellular phone 2 may be connected to the server 7 as a connection destination of URL previously registered to the cellular phone 2 as well as the contents of the emergency mail may be down loaded from the server 7 as the connection destination and displayed on the main display 17. An emergency mail receiving process in this case is shown in a flowchart of Fig. 23. Note that since the processes at steps S351 to S352 of Fig. 23 are the same as those at steps S1 to S3 of Fig. 6, the explanation thereof is omitted to avoid repeated explanation.

The control unit 41 activates at step S353 the browser function and starts connection to the server 7 as the connection destination of the URL previously registered at step S354. The control unit 41 controls at step S355 the main display 17 and causes the main display 17 to display a page as to the contents of the emergency mail down loaded from the server 7 through the public network 4 and the network 6.

With this operation, since the notified contents of the emergency mail can be intensively managed by the server 7, "masquerade" of the emergency mail can be prevented in emergency. Further, since the connection is executed making use of the URL previously registered to the cellular phone 2 itself in place of a URL added to a "masquerade" mail, even if the "masquerade" mail arrives, connection is not executed to a server and a site having no relation.

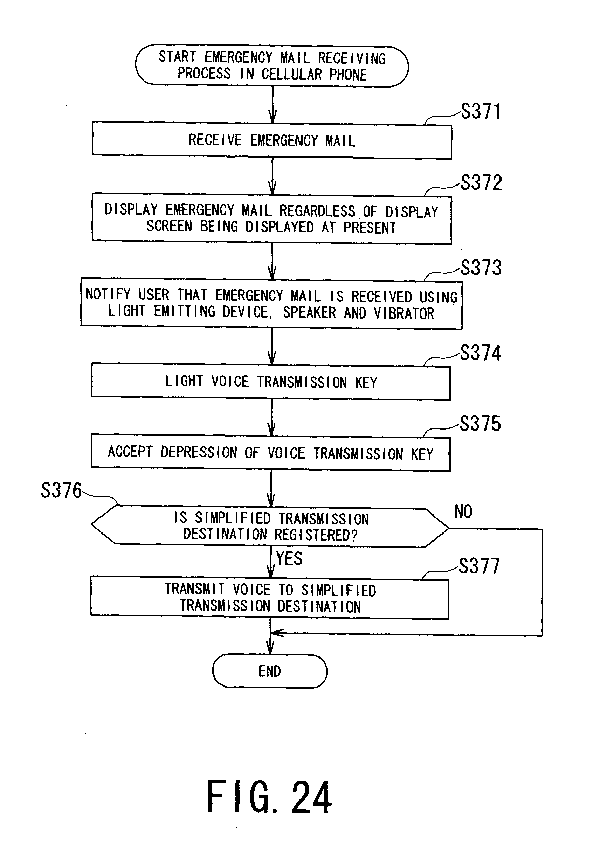

In emergency, a voice transmission may be executed to a preset transmission destination by depressing a voice transmission key of the operation keys 14 in addition that an emergency mail is displayed, and further a TV phone transmission may be executed or a return mail may be transmitted. An emergency mail receiving process in this case is shown in a flowchart of Fig. 24. Note that since the processes at steps S371 to S373 of Fig. 24 are the same as those at steps S1 to S3 of Fig. 6, the explanation thereof is omitted to avoid repeated explanation.

At step S374, the control unit 41 lights the voice transmission key (for example, the key of "1" and the like) of the operation keys 14 from behind the operation key 14 by the light emitting device 51 so that the voice transmission key independently emits light. If the user depresses the voice transmission key of the operation keys 14, the control unit 41 accepts the depression of the voice transmission key at step S375. At step S376, the control unit 41 determines whether or not a simplified transmission destination is registered if an emergency mail is received. If the control unit 41 determines at step S376 that the simplified transmission destination is registered at the time the emergency mail is received, the control unit 41 transmits a voice to the simplified transmission destination through the antenna 31 and the transmission circuit 35.

Note that the TV phone transmission and the return mail are basically the same as that described above, if the return mail is transmitted, the contents of it may be previously stored in the storage device 42. With this operation, if the emergency mail is received, the user having the cellular phone 2 on the reception side can be supported such that he or she promptly makes a phone call to the autonomies that manage the transmission terminal 8.

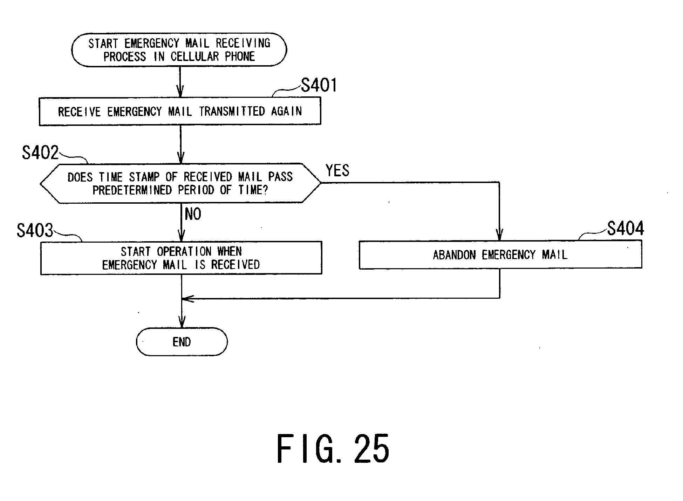

Further, if the cellular phone 2 is located in an area out of service in emergency and when the power supply is turned OFF, it is difficult to securely notify an emergency mail to the user. To cope with the above problem, as shown in Fig. 25, the cellular phone 2 receives at step S401 the emergency mail, which is transmitted again from the transmission terminal managed by the respective autonomies through the antenna 31 and the receiving circuit 33, and the received emergency mail is output to the control unit 41. The control unit 41 determines at step S402 whether or not a time stamp of the received emergency mail has passed a predetermined period of time. If the control unit 41 determines at step S402 that the time stamp of the received emergency mail has passed the predetermined period of time (for example, two days and the like), the control unit 41 abandons the emergency mail at step S404 because the emergency mail, which has passed a long period of time, is meaningless. Note that the emergency mail may be treated as an ordinary mail without subjecting it to the processes executed if an emergency mail is received (the notification process and the display process) even if it is not abandoned.

In contrast, if the control unit 41 determines at step S402 that the time stamp of the received emergency mail has not passed the predetermined period of time, it starts the operation executed if the emergency mail is received and executes the emergency mail display process. Note that the time limit of displaying an emergency mail on the screen, which is previously added to the emergency mail, may be used as the predetermined period of time. With this operation, if the cellular phone 2 is located in the area out of service in emergency and the power supply is turned OFF and thereafter the cellular phone 2 shifts to the area and the power supply is turned on, the emergency mail can be securely notified and thus the delivery ratio of the emergency mail can be improved.

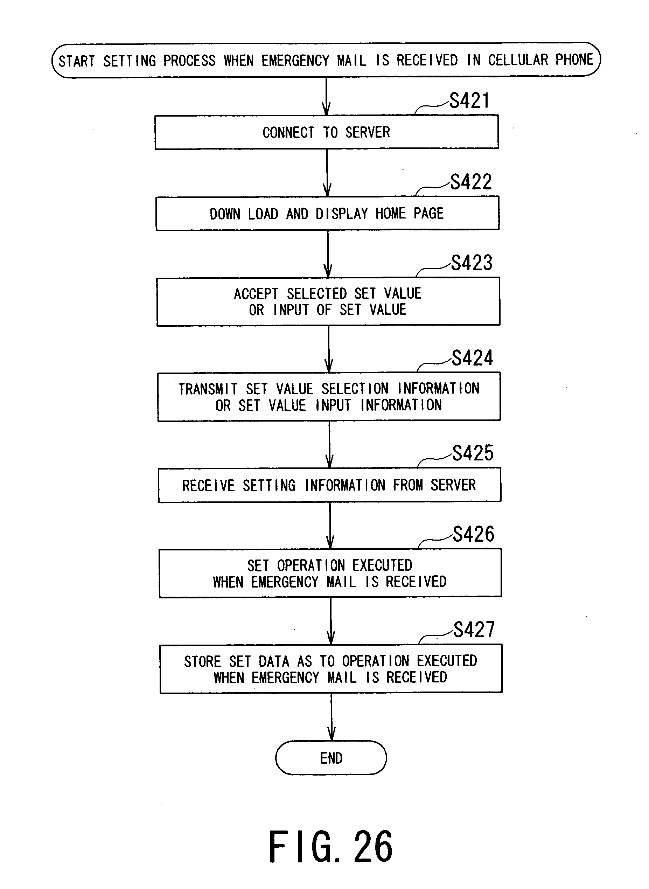

Note that settings as to an emergency mail may be collectively executed in the cellular phone 2 on the reception side. As shown in Fig. 26, at step S421, the control unit 41 is connected to the server 7 through the antenna 31, the transmission circuit 35, and the like and causes the main display 17 to display a home page down loaded from the server 7 at step S422. When the user operates the operation keys 14, the control unit 41 accepts selection of a set value or an input of a set value as to an emergency mail in the cellular phone 2 on the reception side at step S423. At step S424, the control unit 41 transmits the information as to the selection of the input value or the input of the set value which are accepted thereby to the server 7 through the antenna 31, the transmission circuit 35, and the like.

At step S425, the cellular phone 2 receives the set information from the server 7 through the antenna 31, the receiving circuit 33, and the like, and the received set information is input to the control unit 41. At step S426, the control unit 41 sets the operation executed when an emergency mail is received based on the received set information and causes the storage device 42 to store the set data as to the set operation when an emergency mail is received at step S427.

With this operation, even an aged user and the like can simply and collectively execute the settings when an emergency mail is received in detail.

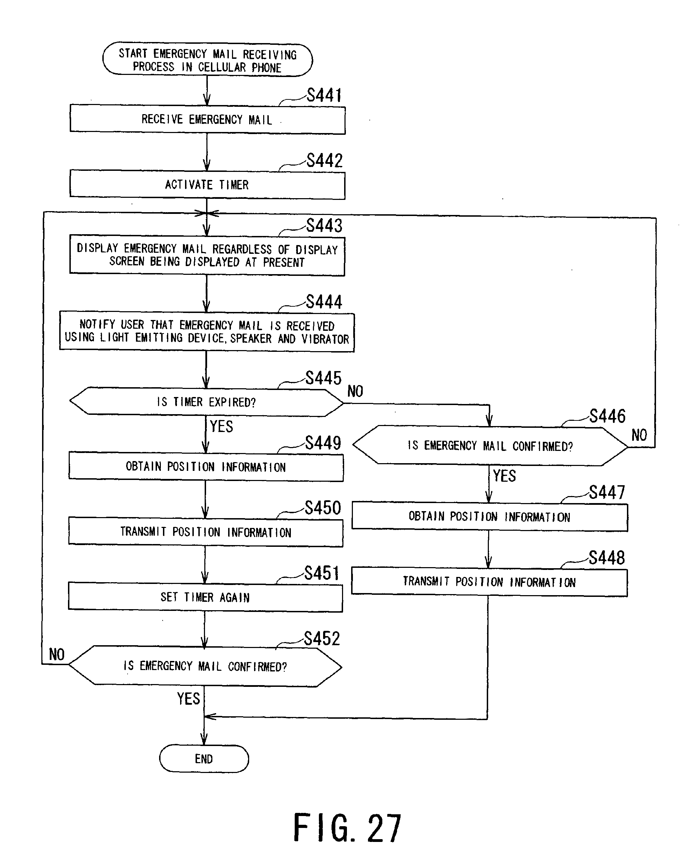

Next, when the user does not execute the emergency mail confirming operation even if a predetermined period of time or longer passes after the cellular phone 2 receives an emergency mail in emergency, position information as to the cellular phone 2 may be measured and sequentially transmitted it to the transmission terminal 8. Fig. 27 shows an emergency mail receiving process using the method. Note that since the processes at steps S441, S443, and S444 of Fig. 27 are the same as those at steps S1 to S3 of Fig. 6, the explanation thereof is omitted to avoid repeated explanation.

At step S442, the control unit 41 starts up a timer for transmitting the position information as to the cellular phone 2 to the transmission terminal 8 using the clock circuit 47 and starts to measure a preset and predetermined period of time by the timer. The control unit 41 determines at step S445 whether or not the timer is expired by that the preset and predetermined period of time has passed. If the control unit 41 determines at step S445 that the timer is not expired by that the preset and predetermined period of time has not passed, the control unit 41 determines at step S446 whether or not the emergency mail confirming operation (the processes at steps S84 to S86 of Fig. 9) is executed by the user.

If the control unit 41 determines at step S446 that the emergency mail confirming operation (the processes at steps S84 to S86 of Fig. 9) is not executed by the user, the process returns to step S 443 and the processes at step S443 and subsequent steps are repeatedly executed. In contrast, if the control unit 41 determines at step S446 that the emergency mail confirming operation (the processes at steps S84 to S86 of Fig. 9) is executed by the user, the control unit 41 activates at step S447 a GPS function and obtains the position information based on the GPS position measurement as to the cellular phone 2. The control unit 41 transmits at step S448 the position information based on the GPS position measurement to the transmission terminal 8 through the antenna 31 and the transmission circuit 35 based on the transmission source address included in the emergency mail.

In contrast, if the control unit 41 determines at step S445 that the timer is expired by that the preset and predetermined period of time has passed, processes for obtaining and transmitting the position information are executed at steps S449 to S450 based on the GPS position measurement as well as the control unit 41 sets again the timer and resumes measurement of the period of time by the timer at step S451.

The control unit 41 determines at step S452 whether or not the emergency mail confirming operation (the processes at steps S84 to S86 of Fig. 9) is executed by the user, and if the confirming operation is not executed, the process returns to step S443 and the processes at step S443 and subsequent steps are repeatedly executed. With this operation, the position information as to the cellular phone 2 is transmitted to the transmission terminal 8 based on the GPS position measurement each predetermined period of time until the emergency mail confirming operation is executed by the user after the emergency mail is received.

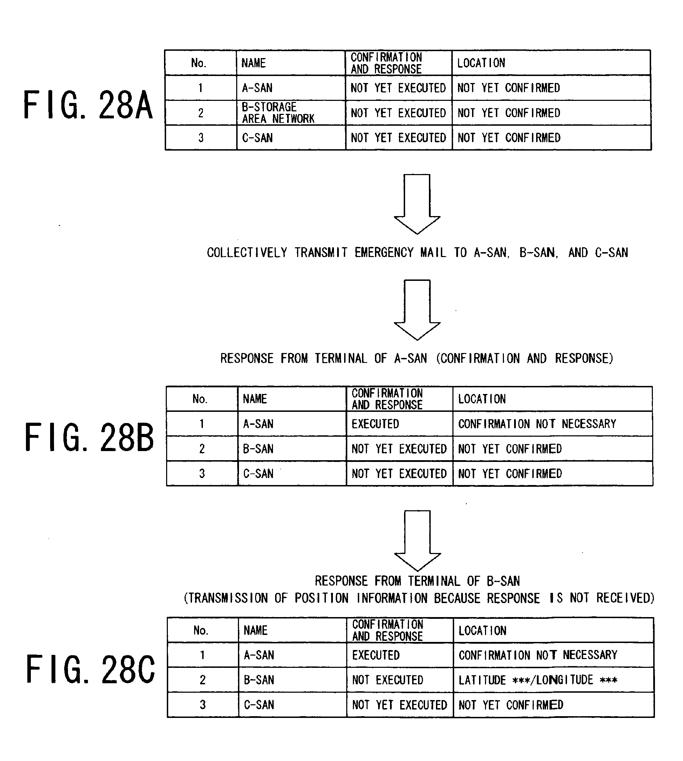

With this operation, even if the confirming operation can not be executed because the cellular phone 2 is left in home and even if the confirming operation can not be executed to an emergency mail due to a poor physical condition and an injury, the position information can be transmitted to the transmission terminal 8, and the transmission terminal 8 can grasp the position information. Note that, as shown in Figs. 28A to 28C, the transmission terminal 8 manages information as to whether or not the transmission confirmation mails from the cellular phones 2 of the respective users are received, what locations are indicated by present position information.

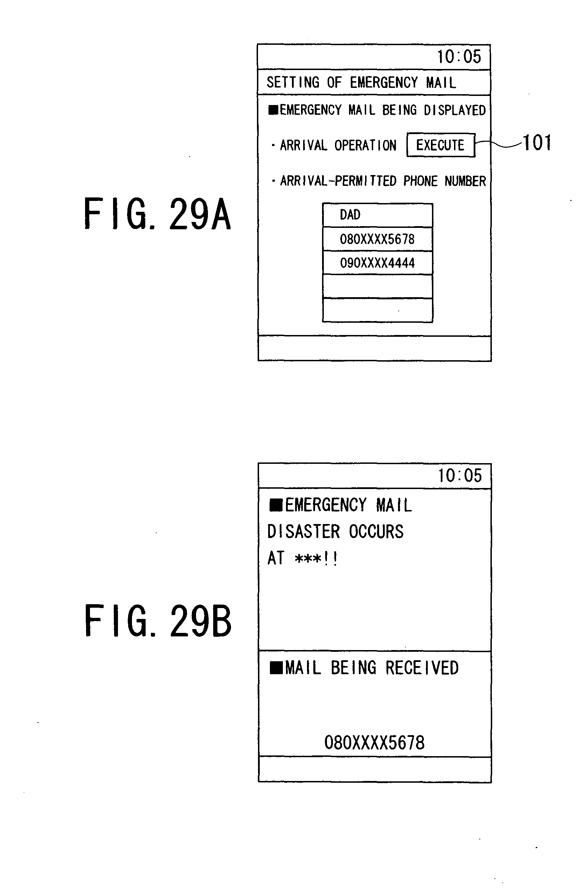

Incidentally, if a voice incoming call arrives while an emergency mail is being displayed, the emergency mail cannot be sufficiently displayed. To cope with the above problem, a phone number, to which arrival of a voice incoming call is permitted while an emergency mail is being displayed, is previously set using a setting screen shown in Fig. 29A. Of the setting shown in the Fig. 29A, arrival of a voice incoming call from the phone numbers of [080-xxxx-5678] and "090-xxxx-4444" is permitted if they are accompanied with "dad". At the time, if a command icon showing "permission" is selected on the setting screen, the input phone number is set to permission.

Further, if a voice incoming call arrives while an emergency mail is being displayed, a display screen displayed on the main display 17 is divided to a display region for the emergency mail and a display region for the voice incoming call as shown in Fig. 29B. An emergency mail receiving process using the method will be explained below.

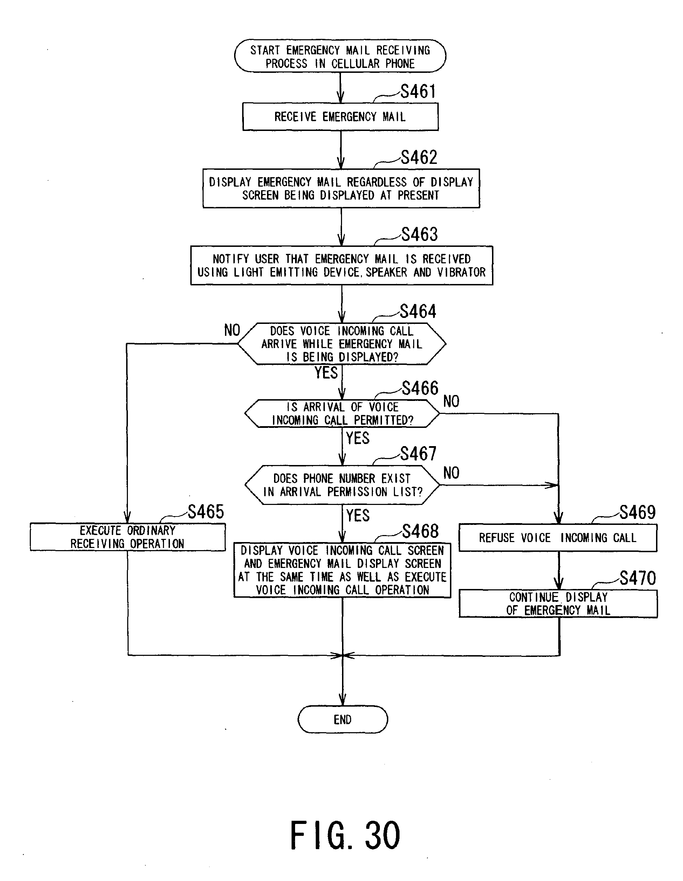

The emergency mail receiving process executed by the cellular phone 2 on the reception side shown in Fig. 4 will be explained referring to a flowchart of Fig. 30. Note that since the processes at steps S461 to S463 of Fig. 30 are the same as those at steps S1 to S3 of Fig. 6, the explanation thereof is omitted to avoid repetition.

The control unit 41 determines at step S464 whether or not a voice incoming call arrives while an emergency mail is being displayed. If the control unit 41 determines at step S464 that the voice incoming call arrives while the emergency mail is not being displayed, it executes at step S465 an ordinary receiving operation and generates vibration by the vibrator 51.

In contrast, if the control unit 41 determines at step S465 that the voice incoming call arrives while the emergency mail is being displayed, the control unit 41 determines at step S466 whether or not arrival of the voice incoming call is permitted while the emergency mail is being displayed by that the permission of arrival thereof is previously set. If the control unit 41 determines at step S466 that the arrival of the voice incoming call is not permitted while the emergency mail is being displayed, the control unit 41 executes an arrival refusing operation at step S469. Thereafter, at step S470, the control unit 41 controls the main display 17 and continuously display the emergency mail.

In contrast, if the control unit 41 determines at step S466 that the arrival of the voice incoming call is permitted while the emergency mail is being displayed, it determines at step S467 whether or not the phone number of the arrived voice incoming call is included in a previously registered arrival permission list, and if the phone number is not included therein, the process goes to step S469. When the phone number is included in the previously registered arrival permission list, the control unit 41 controls at step S468 the main display 17 and causes the main display 17 to display a screen by dividing the screen to the voice incoming call screen and the emergency mail display screen as shown in Fig. 29A as well as executes a voice incoming call arriving operation.

With this operation, the emergency mail is preferentially displayed and the arrival of the voice incoming call is restricted as far as possible. However, a voice incoming call from a specific phone number of a family can be permitted even while an emergency mail is being displayed. With this operation, convenience can be improved when an emergency mail is received.

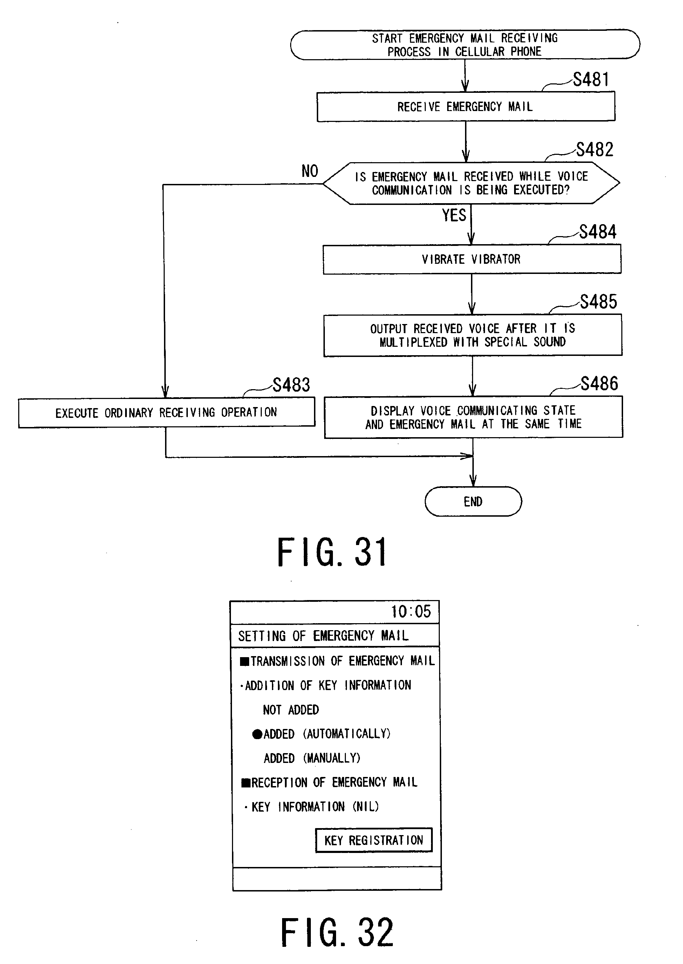

Note that, as shown in Fig. 31, when an emergency mail is received while a voice communication is being executed, the control unit 41 controls at step S484 the vibrator 51 so that the vibrator 51 vibrates in the specific vibration pattern as well as reads out at step S485 the data as to a received voice stored in the storage device 42 and outputs the voice in the voice communication from the telephone receiver 18 through the PCM codec 38 after the voice is multiplexed with the received voice (for example, "this is an emergency mail" and the like) based on the read out data as to the received voice. The control unit 41 controls at step S486 the main display 17 and causes it to display the screen by dividing it to the voice incoming call screen and the emergency mail display screen as shown in Fig. 29A. With this operation, even if an emergency mail is received while a voice communication is being executed, occurrence of a disaster can be notified to the user by the vibrator and the voice without depending on the confirmation executed on the display screen.

Incidentally, to prevent "masquerade" of an emergency mail, key information using a two-dimensional bar code may be previously shared between the transmission terminal 8 and the cellular phone 2 and may be added with an emergency mail. Whether or not the key information is added or whether it is manually added or automatically added may be set using an emergency mail transmission setting screen shown in Fig. 32. Further, the two-dimensional bar code as the key information can be registered by selecting a command icon of "key registration" of Fig. 32. An emergency mail transmission setting process on the emergency mail transmission setting screen will be explained below.

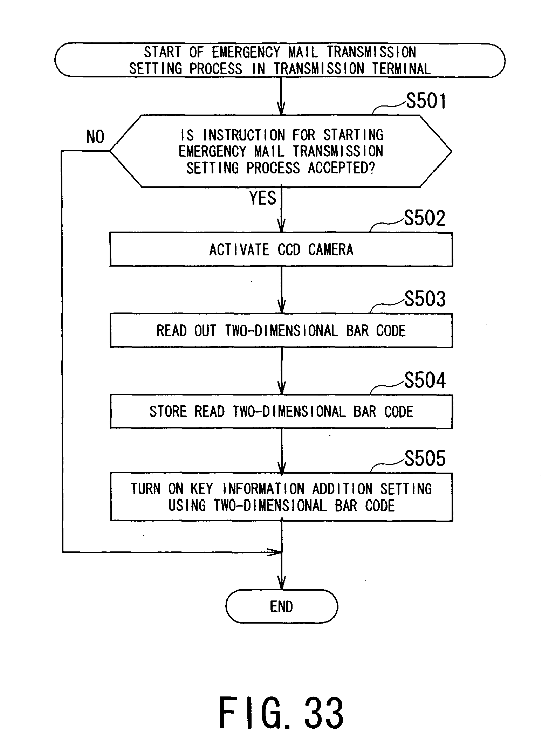

The emergency mail transmission setting process in the transmission terminal 8 shown in Fig. 1 will be explained referring to a flowchart of Fig. 33.

At step S501, the transmission terminal 8 determines at step S501 whether or not an instruction for starting the emergency mail transmission setting process is accepted by that it is operated by an operator who belongs to, for example, an autonomy. When the transmission terminal 8 determines at step S501 that the instruction for starting the emergency mail transmission setting process is accepted, it starts up at step S502 the CCD camera (not shown) disposed thereto, reads out at step S503 the two-dimensional bar code using the CCD camera, and stores at step S504 the read-out two-dimensional bar code. The transmission terminal 8 turns on at step S505 key information addition setting using the two-dimensional bar code and stores data as to the setting.

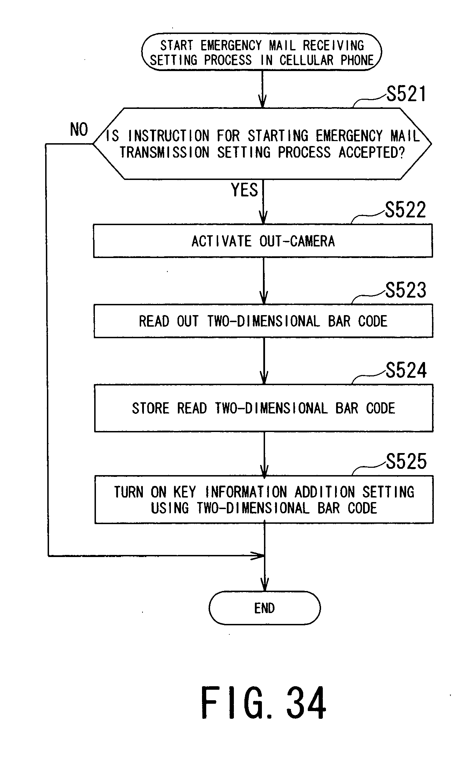

An emergency mail receiving process executed by the cellular phone 2 on the reception side shown in Fig. 4 will be explained referring to a flowchart of Fig. 34. Note that since the emergency mail reception setting process of Fig. 34 is basically the same as the emergency mail transmission setting process in the transmission terminal 8 shown in Fig. 33, the explanation thereof is omitted to avoid repeated explanation.

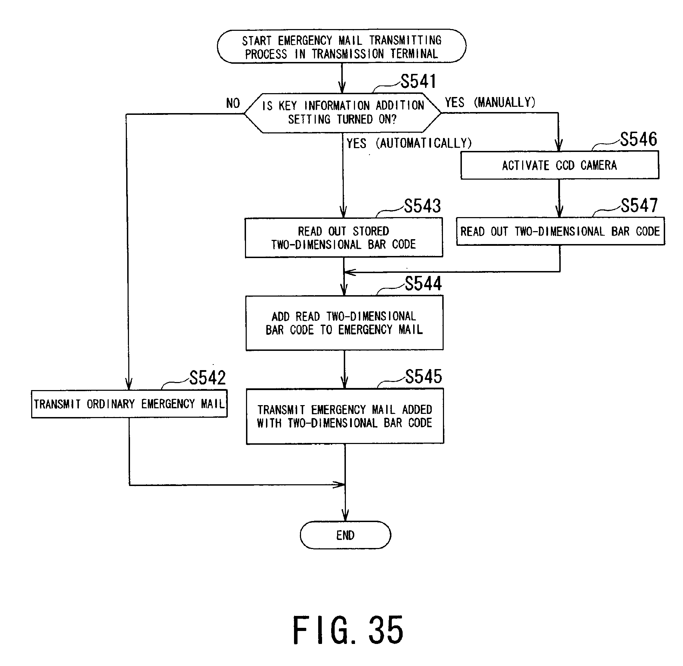

Next, an emergency mail transmitting process in the transmission terminal 8 shown in Fig. 1 will be explained referring to a flowchart of Fig. 35.

The transmission terminal 8 determines at step S541 whether or not the key information addition setting is turned ON. When the transmission terminal 8 determines at step S541 that the key information addition setting is turned OFF, it transmits at step S542 an ordinary emergency mail (i.e. an emergency mail added with no key information) to the cellular phone 2 of the user.

When the transmission terminal 8 determines at step S541 that the key information addition setting is turned ON and that the key information is set to automatic addition, the transmission terminal 8 reads out at step S543 the stored two-dimensional bar code, adds at step S544 the read two-dimensional bar code with an emergency mail, and transmits at step S545 the emergency mail added with the two-dimensional bar code to the cellular phone 2 of the user. In contrast, when the transmission terminal 8 determines at step S541 that the key information addition setting is turned ON and that the key information is set to manual addition, the transmission terminal 8 starts up at step S546 the CCD camera (not shown) disposed thereto and reads at step S547 the two-dimensional bar code using the CCD camera. At step S544, the two-dimensional bar code is added to the emergency mail in a subsequent process.

Note that even in any of the automatic addition and the manual addition, a two-dimensional bar code, which is determined at random from several two-dimensional bar codes (for example, at least three two-dimensional bar codes), may be added to the emergency mail.

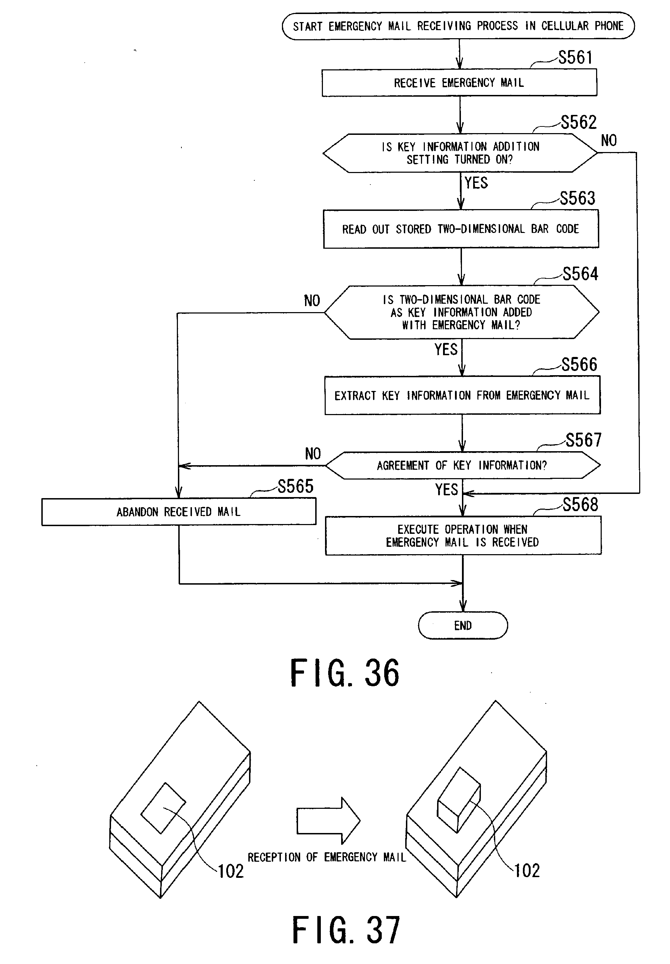

An emergency mail receiving process executed by the cellular phone 2 on the reception side shown in Fig. 4 will be explained referring to a flowchart of Fig. 36. Note that since step S561 of Fig. 36 is the same as that at step S1 of Fig. 6, the explanation thereof is omitted.

The control unit 41 determines at step S562 whether or not the key information addition setting is turned ON in the cellular phone 2. When the control unit 41 determines at step S562 that the key information addition setting is not turned ON in the cellular phone 2, the process goes to step S568 at which the operation when an emergency mail is received is executed.

In contrast, when the control unit 41 determines at step S562 that the key information addition setting is turned ON in the cellular phone 2, it reads out the two-dimensional bar code as the key information which is previously stored in a specific region of the storage device 42. The control unit 41 determines at step S564 whether or not that the two-dimensional bar code as the key information is added to a received emergency mail. When the control unit 41 determines that the two-dimensional bar code is not added, it abandons the received emergency mail without executing the operation when the emergency mail is received because there is a possibility that the received emergency mail is "masquerade". When the control unit 41 determines that the two-dimensional bar code is added, it extracts at step S566 the two-dimensional bar code as the key information from the emergency mail and determines at step S567 whether or not the extracted key information agrees with (or approximates) the read-out two-dimensional bar code. When the former does not coincide with the latter, the process goes to step S565 at which the received emergency mail is abandoned. When the former agrees with the latter, the process goes to step S568 at which the operation when the emergency mail is received is started. Note that the emergency mail may be treated as an ordinary mail without subjecting it to the process executed when the emergency mail is received (notification process and display process) without abandoning it.

With this operation, when an emergency mail whose transmission source address and the like are pretended is received by the cellular phone 2, "masquerade" of the emergency mail can be preferably prevented by not executing the operation when the emergency mail is received. Note that although the two-dimensional bar code is used as the key information, the present invention is not limited to this case, and any information which can be shared between the terminals may be employed.

Note that when an emergency mail is received by the cellular phone 2 and the reception of the emergency mail is notified to the user, for example, an external antenna may be moved using a motor (not shown) and the like so that it is extended in an external direction, or the cellular phone 2 may be changed from the closed state to the open state by a motor (not shown) disposed to the hinge device 11. As shown in Fig. 37, a projection 102 may be projected externally of the cellular phone 2 using a motor, a spring, and the like.

It is needless to say that the respective processes disclosed in the specification may be appropriately combined. With this arrangement, a composite advantage can be generated corresponding to the respective processes.

Note that the present invention can be also applied to a PDA (Personal Digital Assistant), a personal computer, a mobile game machine, a mobile music player, a mobile motion picture player, and other mobile terminals in addition to the cellular phone 2.

Further, a series of the processes explained in the embodiment may be executed by hardware although it can be executed by software.

Further, although the embodiment shows an example of the processes in which the steps of the flowcharts are time-sequentially executed in the described order, they are not necessarily executed time-sequentially and may be executed in parallel with each other or may be individually executed.

## Claims

1. A mobile terminal comprising:
a receiving unit configured to receive a first mail and a second mail different from the first mail;
a determining unit configured to determine whether or not determining information included in a mail received by the receiving unit coincides with previously stored determining information; and
a control unit configured to control so as to determine that the received mail is the first mail and execute an operation if the first mail is received, in a case where the determining unit determines that the determining information included in the mail received by the receiving unit coincides with the previously stored determining information.

2. The mobile terminal according to Claim 1, wherein the determining information includes a sender address, a subject of the received mail and a character string of leading end of a text.

3. The mobile terminal according to Claim 1, wherein the determining information includes a center address, a sender address and a character string of leading end of a text.

4. The mobile terminal according to Claim 1, wherein the first mail is an emergency mail.

5. A mobile terminal comprising:
a receiving unit configured to receive an emergency mail from an external terminal;
a display unit configured to display the emergency mail if the emergency mail is received by the receiving unit;
a notifying unit configured to notify that the emergency mail is received; and
a control unit configured to control the notifying unit so as to notify that the emergency mail is received, each predetermined period of time until a confirming operation is executed to the emergency mail.

6. The mobile terminal according to Claim 5, wherein the notifying unit notifies that the emergency mail is received, with use of at least one of a light emitting device, speaker and vibrator.

7. The mobile terminal according to Claim 5, wherein the control unit determines that the confirming operation is executed to the emergency mail, if the mobile terminal is changed from a closed state to a open state.

8. The mobile terminal according to Claim 5, wherein the control unit determines that the confirming operation is executed to the emergency mail, if a predetermined key is depressed.

9. The mobile terminal according to Claim 5, further comprising a transmitting unit configured to transmit a transmission confirmation mail to the external terminal if the control unit determines that the confirming operation is executed to the emergency mail.

10. A mobile terminal comprising:
a receiving unit configured to receive an emergency mail from an external terminal;
a display unit configured to display the emergency mail received by the receiving unit;
a notifying unit configured to notify that the emergency mail is received;
an obtaining unit configured to obtain position information related to the mobile terminal each predetermined period of time until a confirming operation is executed to the emergency mail; and
a transmitting unit configured to transmit the position information obtained by the obtaining unit to the external terminal.

11. The mobile terminal according to Claim 10 wherein it is determined that the confirming operation is executed to the emergency mail, if the mobile terminal is changed from a closed state to an open state.

12. The mobile terminal according to Claim 10, wherein it is determined that the confirming operation is executed to the emergency mail, if a predetermined key is depressed.

13. A mobile terminal comprising:
a receiving unit configured to receive an emergency mail from an external terminal;
a display unit configured to display the emergency mail received by the receiving unit;
a notifying unit configured to notify that the emergency mail is received; and
a display control unit configured to control the display unit so as to display a display screen for displaying the emergency mail in a first display region and an arrival screen when the voice incoming call arrives, in a second display region, if a voice incoming call arrives while the emergency mail is being displayed by the display unit.

14. A mobile terminal comprising:
a receiving unit configured to receive an emergency mail from an external terminal;
a determining unit configured to determine whether or not key information included in the emergency mail received by the receiving unit coincides with previously stored key information; and
a control unit configured to control so as to execute an operation when the emergency mail is received, if the determining unit determines that the key information included in the emergency mail received by the receiving unit coincides with previously stored key information, and so as to abandon the received emergency mail or treat the received emergency mail as an ordinary mail if the determining unit determines that the key information included in the emergency mail received by the receiving unit does not coincide with previously stored key information.

15. The mobile terminal according to Claim 14, wherein the key information is a two-dimensional bar code.
